# NEUE EUROPÄISCHE PATENTSCHRIFT

(11) **EP 2 633 914 B2**
(45) Veröffentlichungstag und Bekanntmachung des Hinweises auf die Entscheidung über den Einspruch: **08.04.2020**
(45) Hinweis auf die Patenterteilung: 18.06.2014
(21) Anmeldenummer: 12001439.4
(22) Anmeldetag: 02.03.2012
(51) Int. Cl.: B01L 3/02, B23P 15/00

(54) **Pipettiervorrichtung und Verfahren zu ihrer Herstellung**
Pipetting device and method for its production
Dispositif de pipetage et son procédé de fabrication

(43) Veröffentlichungstag der Anmeldung: 04.09.2013
(73) Patentinhaber: Eppendorf AG, 22339 Hamburg (DE)
(72) Erfinder: Link, Holger, 22339 Hamburg (DE); David, Tobias, 22941 Bargteheide (DE)
(74) Vertreter: Ricker, Mathias

(56) Entgegenhaltungen:
- WO-A1-2004/062805
- US-A- 3 963 061
- US-A- 5 214 698
- US-A- 5 294 405
- US-B1- 6 253 628

## Beschreibung

Die Erfindung bezieht sich auf eine Pipettiervorrichtung und ein Verfahren zur Herstellung dieser Pipettiervorrichtung.

Solche Pipettiervorrichtungen werden üblicherweise in medizinischen, biologischen, biochemischen, chemischen und anderen Laboratorien verwendet. Sie dienen im Labor zum Transport und Übertragen von fluiden Proben, insbesondere zur präzisen Dosierung der Proben. Bei Pipettiervorrichtungen werden z.B. flüssige Proben mittels Unterdruck in Pipettierbehälter, z.B. Messpipetten, eingesaugt, dort gelagert, und am Zielort wieder aus diesen abgegeben.

Zu den Pipettiervorrichtungen gehören z.B. handgehaltene Pipettiervorrichtungen oder automatisch gesteuerte Pipettiervorrichtungen, insbesondere computergesteuerte Pipettierautomaten. Es handelt sich in der Regel um Luftpolster-Pipettieworrichtungen. Bei diesen ist ein Luftpolster vorgesehen, dessen Druck beim Aufnehmen der Probe in den Pipettierbehälter verringert wird, wodurch die Probe mittels Unterdruck in den Pipettierbehälter gesaugt wird. Solche Pipettiervorrichtungen sind in der Regel elektrisch betriebene Geräte, die auch als Pipettierhilfen bezeichnet werden.

Solche Pipettiervorrichtungen sind in der Regel dazu ausgelegt, fluide Proben mit Volumina im Bereich von z.B. 0,1 ml bis 100 ml zu pipettieren. Solche Pipettiervorrichtungen besitzen meist eine elektrisch angetriebene Pumpe, erfahrungsgemäß eine Membranpumpe, die zum Pipettieren geeignet ist, die also sowohl einen Unterdruck, als auch einen Überdruck erzeugen kann. Der Begriff "pipettieren" umfasst hier sowohl die Probenaufnahme durch Aufsaugen mittels Unterdruck als auch die Probenabgabe durch Gravitation und/oder Auspressen durch Überdruck. Zum Pipettieren wird üblicherweise eine Saug-/Druckleitung verwendet, deren Aktivität mittels geeigneter Ventile im Gehäusekörper durch die bedienende Person gesteuert werden kann.

Ein Beispiel für eine kommerziell erhältliche, handgehaltene, elektrische Pipettiervorrichtung ist die Eppendorf Easypet® der Eppendorf AG, Hamburg, Deutschland.

Zur besseren Dosierung der pipettierten Flüssigkeitsmenge sind Vorrichtungen bekannt, die den Volumenstrom in den Druckleitungen beziehungsweise Saugleitungen begrenzen, oder die Leistung beziehungsweise den Druck der Pumpe entsprechend anpassen.

In US 3 963 061 und US 6 253 628 sind Ventile beschrieben, welche den Volumenstrom in den Druck- bzw. Saugleitungen begrenzen sollen. Hierbei wird die Ventilnadel mit einem Profil versehen, welches die freie Durchtrittsfläche in der Druck- bzw. Saugleitung je nach Hub der Ventilnadel verändert. Die exakte Dosierung, vor allem bei Pipetten mit kleinem Volumen, kann mit derartigen Systemen nur unzureichend erreicht werden. Vor allem bei gedrosselter Pumpenleistung zeigt sich deutlich, dass die Dosierung stark von der Hubfrequenz der Pumpe abhängig ist. Trotz angedrosseltem Volumenstrom setzen sich die Pulsationen der Pumpe bis in die Pipette fort und sorgen somit für eine stoßweise Dosierung der Flüssigkeit. Die Einhaltung eines genauen Volumens ist hierbei nur schwer zu erreichen.

Das Patent DE 103 22 797 beschreibt eine Anordnung, bei der neben den Drosselelementen in Druck- und Saugleitung ebenfalls separat angedrosselte Öffnungen zur Umgebung bestehen. Diese sind direkt mit der Druck- bzw. Saugleitung verbunden und sollen den maximalen Ober- bzw. Unterdruck der Pumpe auf einen definierten Wert begrenzen. Dadurch ist diese Anordnung in Bezug auf Variabilität stark eingeschränkt. Der Benutzer muss sich vor dem Pipettieren genau überlegen, welche Einstellung an den Drosseln für die entsprechende Fluidmenge vorgenommen werden muss.

Es ist Aufgabe der Erfindung eine Pipettiervorrichtung bereitzustellen, die ein genaues Pipettieren und Dosieren erlaubt, das insbesondere unabhängig von der Pipettierbehältergröße ist. Ferner ist es Aufgabe der Erfindung, ein Verfahren zur Herstellung dieser Pipettiervorrichtung anzugeben.

Die Erfindung löst diese Aufgabe durch die Pipettiervorrichtung nach Anspruch 1 und das Verfahren nach Anspruch 16. Bevorzugte Ausgestaltungen sind insbesondere Gegenstände der Unteransprüche.

Die Pipettiervorrichtung, insbesondere zum Pipettieren einer fluiden Probe durch Ansaugen in einen Pipettierbehälter mittels einer unter einem Pipettierdruck stehenden Luft, weist auf:
- eine Ventilanordnung mit mindestens einer Ventileinrichtung zum Einstellen eines Pipettierdrucks, wobei die Ventileinrichtung mindestens eine Ventilkammer aufweist;
- mindestens eine Pumpeneinrichtung, die zur Erzeugung mindestens eines Kammerdrucks in der mindestens einen Ventilkammer mit dieser verbunden ist;
- einen Pipettierkanal, mit dem der Pipettierbehälter verbindbar ist und
- einen Bypasskanal, der zur Umgebung offen ist;
- wobei der Pipettierkanal und der Bypasskanal jeweils mit der Ventilkammer verbunden sind und insbesondere parallel zueinander mit der Ventilkammer verbunden sind;
- dabei ist die mindestens eine Ventileinrichtung so ausgebildet, dass, zur Erzeugung des gewünschten Pipettierdrucks in dem Pipettierkanal, der Kammerdruck von der Ventileinrichtung auf den Pipettierkanal und den Bypasskanal verteilt wird, insbesondere in Abhängigkeit von der Position eines Verschlusselementes der Ventileinrichtung verteilt wird.

Der Vorteil der Erfindung liegt darin, dass eine genaue Dosierung des Pipettiervolumens möglich ist. Durch den geschaffenen Bypass setzen sich Schwankungen des Pumpendrucks (Unterdruck und/oder Überdruck) beim Dosieren im Wesentlichen nicht vollständig bis in den mit dem Pipettierkanal verbundenen Pipettierbehälter fort, insbesondere nicht bei niedriger Pumpleistung. Im Fall einer als Membranpumpe ausgebildeten Pumpeneinrichtung setzen sich insbesondere die durch die Membranbewegung verursachten Pulsationen im Wesentlichen nicht vollständig bis in den Pipettierbehälter fort. Im optionalen Falle der vollen Leistung der Pumpeneinrichtung können insbesondere selbst Pipettierbehälter mit kleinem Pipettiervolumen (z.B. < 5 mL) sehr genau befüllt werden. Entsprechend verhält es sich beim Abgeben der fluiden Probe aus dem Pipettierbehälter.

Der Ausdruck "verbinden zweier luftgefüllten Bereiche der Ventilanordnung" bedeutet im Rahmen der vorliegenden Erfindung, dass die beiden Bereiche durch einen Verbindungskanal aneinander angeschlossen sind, so dass insbesondere Luft zwischen beiden Bereichen bewegt werden kann, insbesondere richtungs-unabhängig bewegt werden kann. Eine solche Verbindung kann insbesondere indirekt sein oder "direkt" sein. Der Begriff "direkte Verbindung" zweier luftgefüllter Bereiche der Ventilanordnung bedeutet im Rahmen der vorliegenden Erfindung insbesondere, dass die beiden Bereiche durch einen unverzweigten Verbindungskanal verbunden sind, wobei es möglich ist, dass in diesem Verbindungskanal ein änderbarer Strömungswiderstand vorgesehen ist, z.B. eine Einrichtung mit Drosselfunktion, insbesondere ein Drosselventil. Bei einer indirekten Verbindung können die beiden Bereiche z.B. über mehrere Leitungen oder Kammern, und/oder z.B. entlang einer oder mehrerer Verzweigungsstellen, verbunden sein.

Ein Kanal, insbesondere Verbindungskanal, kann eine Leitung sein, insbesondere eine Schlauchleitung, oder kann ein anders zur Führung des Strömungsmediums ausgebildeter Bereich der Ventilanordnung oder der Pipettiervorrichtung sein, z.B. ein in ein gegossenes Formteil integrierter Kanal.

Vorzugsweise ist genau eine Pumpeneinrichtung vorgesehen, die insbesondere eine Membranpumpe ist oder eine solche aufweist. Die Pumpeneinrichtung weist vorzugsweise eingangsseitig einen ersten Pumpkanal auf, der als Saugkanal zum Ansaugen der fluiden Probe in den mit dem Pipettierkanal verbundenen Pipettierbehälter ausgebildet ist. Die Pumpeneinrichtung weist vorzugsweise ausgangsseitig einen zweiten Pumpkanal auf, der als Presskanal zum Auspressen der fluiden Probe aus dem mit dem Pipettierkanal verbundenen Pipettierbehälter ausgebildet ist.

In der zweiten Position verschließt vorzugsweise das Verschlusselement den ersten Verbindungskanal nicht und verschließt vorzugsweise gleichzeitig den zweiten Verbindungskanal.

Durch das Verschlusselement, insbesondere durch ein einziges Verschlusselement, können insbesondere der erste Strömungswiderstand und der zweite Strömungswiderstand gleichzeitig angepasst werden. Auf diese Weise ist eine einfache Realisierung der Einstellung des Pipettierdrucks möglich.

Ein Verschlusselement ist vorzugsweise ein Ventilkolben, und dass Verschlussträgerelement ist in diesem Fall vorzugsweise ein Kolbenträgerelement. Vorzugsweise ist die Ventileinrichtung eine Nadelventileinrichtung, bei der der Ventilkolben ein Nadelventilkolben ist. Dadurch ist eine präzise Übersetzung der Bewegung des Ventilkolbens in eine Druckänderung im ersten und/oder zweiten Verbindungskanal und damit eine genaue Einstellung des Pipettierdrucks im Pipettierkanal möglich.

Vorzugsweise ist das Verschlusselement mit einer Federeinrichtung gefedert gelagert, die das Verschlusselement in die erste Position presst und die durch Bewegen des Verschlusselementes von der ersten Position in die zweite Position gespannt wird.

Vorzugsweise ist das Verschlusselement so ausgebildet, dass es den ersten Verbindungskanal und den zweiten Verbindungskanal teilweise öffnet, wenn es in mindestens einer dritten Position zwischen der ersten und der zweiten Position angeordnet ist. Vorzugsweise sind der erste Verbindungskanal und der zweite Verbindungskanal auf mindestens der Hälfte der Strecke zwischen erster und zweiter Position jeweils teilweise geöffnet. Durch diese dritte Position wird ermöglicht, dass die Pumpeneinrichtung nicht nur mit dem Pipettierkanal verbunden ist, sondern gleichzeitig auch mit dem zur Umgebung hin offenen Bypasskanal. Auf diese Weise werden Schwankungen des Kammerdrucks zumindest nicht vollständig zum Pipettierkanal übertragen, sondern gedämpft. Dadurch ist ein genaues Pipettieren möglich. Vorzugsweise ist das Verschlusselement so ausgebildet ist, dass es den ersten Verbindungskanal in einer dritten Position weiter verschließt als in einer vierten Position, und vorzugsweise den zweiten Verbindungskanal in der vierten Position weiter schließt als in der dritten Position. Die dritte Position und vierte Position liegen dabei insbesondere zwischen der ersten Position und zweiten Position. Durch diese Maßnahme ist eine gezielte Anpassung der Verteilung des Druckabfalls vom Kammerdruck über den Pipettierkanal und über den Bypasskanal in Abhängigkeit von der Position des Verschlusselementes möglich. Vorzugsweise liegt die dritte Position näher an der ersten Position, und die zweite Position näher an der vierten Position.

Vorzugsweise weist die mindestens eine Ventileinrichtung eine Ventilkammer auf, wobei das Verschlusselement ein Ventilkolben ist, der sich entlang einer Achse A durch die Ventileinrichtung erstreckt und gegenüber dem Basiskörper entlang der Achse A translatorisch zumindest zwischen einer ersten Position und einer zweiten Position beweglich ist. Vorzugsweise ist die Ventilkammer zumindest teilweise in dem Kolbenträgerelement angeordnet.

Vorzugsweise ist die Pipettiervorrichtung manuell bedienbar, wobei die Ventileinrichtung dazu ausgebildet ist, dass die Position des Verschlusselementes vom Benutzer bestimmt wird, um den gewünschten Pipettierdruck in der Pipettierleitung einzustellen. Vorzugsweise ist vorgesehen, dass die Bewegung des Verschlusselementes vom Benutzer angetrieben wird. Es ist aber auch möglich, dass die Bewegung des Verschlusselementes elektrisch angetrieben wird und insbesondere durch eine vorzugsweise vorgesehene elektrische Steuereinrichtung der Pipettiervorrichtung gesteuert wird.

Vorzugsweise weist der erste Verbindungskanal einen ersten Öffnungsquerschnitt auf und der Ventilkolben einen ersten Kolbenabschnitt auf, der beweglich im ersten Öffnungsquerschnitt angeordnet ist, um diesen zwischen der ersten und zweiten Position zumindest teilweise oder vollständig zu verschließen, insbesondere in Abhängigkeit von der Position des Ventilkolbens mit einem anderen ersten Öffnungsquerschnitt. Vorzugsweise. weist der zweite Verbindungskanal einen zweiten Öffnungsquerschnitt auf und der Ventilkolben einen zweiten Kolbenabschnitt auf, der beweglich im zweiten Öffnungsquerschnitt angeordnet ist, um diesen zwischen der zweiten und ersten Position zumindest teilweise oder vollständig zu verschließen, insbesondere in Abhängigkeit von der Position des Ventilkolbens mit einem anderen zweiten Öffnungsquerschnitt. Der erste Kolbenabschnitt und der zweite Kolbenabschnitt können jeweils ein Drosselabschnitt sein oder einen solchen aufweisen, der insbesondere konusförmig ausgebildet sein kann. Dadurch ist eine einfache Realisierung eines variablen Strömungswiderstandes im ersten Verbindungskanal und/oder im zweiten Verbindungskanal möglich.

Vorzugsweise weist der erste Kolbenabschnitt und/oder der zweite Kolbenabschnitt einen konusartigen Abschnitt auf, dessen Querschnitt senkrecht zur Achse A sich entlang der Achse zumindest abschnittsweise kontinuierlich und/oder teilweise stufenweise verändert. Durch die konusförmige Ausbildung des ersten und/oder des zweiten Kolbenabschnittes kann insbesondere eine sanfte und komfortable Einstellung des Pipettierdrucks erreicht werden.

In einer ersten bevorzugten Ausführungsform der Erfindung ist die Pumpeneinrichtung mit der Ventilkammer einer ersten Ventileinrichtung verbunden und mit der Ventilkammer einer zweiten Ventileinrichtung verbunden. Vorzugsweise ist ein erster Pumpkanal der Pumpeneinrichtung mit der ersten Ventileinrichtung verbunden und ein zweiter Kanal der Pumpeneinrichtung mit der zweiten Ventileinrichtung verbunden. Die Pumpeneinrichtung weist dabei vorzugsweise eine Pumpe auf, insbesondere Membranpumpe, vorzugsweise eine einzige Pumpe. Gemäß der ersten bevorzugten Ausführungsform der Erfindung weist die Pipettiervorrichtung vorzugsweise mindestens eine, vorzugsweise genau eine, erste Ventileinrichtung mit einer ersten Ventilkammer und eine, vorzugsweise genau eine, zweite Ventileinrichtung mit einer zweiten Ventilkammer auf, wobei die mindestens eine, vorzugsweise genau eine, Pumpeneinrichtung zur Erzeugung eines ersten Kammerdrucks in der ersten Ventilkammer mit dieser ersten Ventilkammer verbunden ist und zur Erzeugung eines zweiten Kammerdrucks in der zweiten Ventilkammer mit dieser zweiten Ventilkammer verbunden ist, wobei die erste Ventilkammer und die zweite Ventilkammer jeweils mit dem mindestens einen, vorzugsweise genau einen, Pipettierkanal und dem mindestens einen, vorzugsweise genau einen, Bypasskanal verbunden sind. Vorzugsweise ist die erste Ventileinrichtung so ausgebildet, dass in dem Pipettierkanal ein Druck eingestellt wird, der zum Ansaugen einer fluiden Probe in einen mit dem Pipettierkanal luftdicht verbundenen Pipettierbehälter geeignet ist. Vorzugsweise ist die zweite Ventileinrichtung so ausgebildet, dass in dem Pipettierkanal ein Druck eingestellt wird, der zum Abgeben einer fluiden Probe aus einem mit dem Pipettierkanal luftdicht verbundenen Pipettierbehälter geeignet ist.

Vorzugsweise weist die Ventilanordnung genau einen Bypasskanal auf. Vorzugsweise ist mindestens ein direkt mit der Pumpeneinrichtung verbundener Pumpkanal direkt mit der Umgebung und/oder dem Bypasskanal verbunden. Bei einer zum Ansaugen der zu pipettierenden Probe in den Pipettierbehälter ausgebildeten Ventileinrichtung ist vorzugsweise der ausgangsseitige Pumpkanal direkt mit dem Bypasskanal und/oder der Umgebung verbunden. Bei einer zum Auspressen der zu pipettierenden Probe aus dem Pipettierbehälter ausgebildeten Ventileinrichtung ist vorzugsweise der eingangsseitige Pumpkanal direkt mit der Umgebung und/oder dem Bypasskanal verbunden.

In einer bevorzugten Ausführungsform der Erfindung ist die Pumpeneinrichtung mit der Ventilkammer einer ersten Ventileinrichtung verbunden und mit der Ventilkammer einer zweiten Ventileinrichtung verbunden.

Der Pipettierkanal ist über einen ersten Verbindungskanal mit variablem Strömungswiderstand mit der Ventilkammer verbunden und der Bypasskanal ist über einen zweiten Verbindungskanal mit variablem Strömungswiderstand mit der Ventilkammer verbunden, wobei, zur Erzeugung des gewünschten Pipettierdrucks in dem Pipettierkanal, der erste Strömungswiderstand und der zweite Strömungswiderstand von der Ventileinrichtung angepasst werden, insbesondere gleichzeitig angepasst werden. Variable Strömungswiderstände lassen sich relativ effizient konstruktiv integrieren.

Vorzugsweise weist die Ventileinrichtung ein Verschlussträgerelement auf und mindestens ein Verschlusselement auf, das gegenüber dem Verschlussträgerelement zumindest zwischen einer ersten Position und einer zweiten Position vorzugsweise translatorisch beweglich, vorzugsweise beweglich, vorzugsweise translatorisch und/oder rotatorisch beweglich angeordnet ist.

In der ersten Position verschließt das Verschlusselement den ersten Verbindungskanal vorzugsweise und verschließt vorzugsweise gleichzeitig den zweiten Verbindungskanal nicht.

Vorzugsweise ist bei der Ventilanordnung mindestens ein Trägerbauteil vorgesehen, das insbesondere einstückig gefertigt wird, und das vorzugsweise zumindest einen Teil des Pipettierkanal aufweist, vorzugsweise mindestens einen Teil des Bypasskanals aufweist und vorzugsweise mindestens einen Teil der Ventilkammer mindestens einer Ventileinrichtung, vorzugsweise von genau zwei Ventileinrichtungen, aufweist. Vorzugsweise weist dieses Trägerbauteil mindestens einen Aufnahmebereich zur Aufnahme eines Kolbenträgerelementes auf, insbesondere genau zwei solcher Aufnahmebereiche.

Ein Pipettierbehälter ist insbesondere ein hohlzylinderartiges Behältnis, das eine erste Öffnung zum Aufnehmen/Abgeben der fluiden Probe und mindestens eine zweite Öffnung zum Anlegen des Pipettierdrucks aufweist. Vorzugsweise weist der Pipettierbehälter einen Verbindungsabschnitt auf, mit dem er lösbar, insbesondere luftdicht und druckdicht, mit dem entsprechenden, vorzugsweise vorgesehenen, Verbindungsabschnitt der Pipettiervorrichtung verbindbar ist. Ein Pipettierbehälter ist vorzugsweise eine kommerziell erhältliche Messpipette oder Vollpipette. Die möglichen Pipettierbehältergrößen, also die maximalen Fassungsvolumina, eines Pipettierbehälters können insbesondere zwischen 0,1 ml und 100 ml liegen. Die fluide Probe ist meist eine flüssige, insbesondere vorwiegend wässrige Probe, z.B. eine physiologische wässrige Lösung.

Weitere bevorzugte Ausgestaltungen und Merkmale der erfindungsgemäßen Pipettiervorrichtung und des erfindungsgemäßen Verfahrens zu seiner Herstellung ergeben sich aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Es zeigen:
Fig. 1 zeigt in einer schematischen Seitenansicht ein erstes Ausführungsbeispiel der erfindungsgemäßen Pipettiervorrichtung.
Fig. 2a zeigt eine Querschnittsansicht durch eine Ventilanordnung der Pipettiervorrichtung in Fig. 1, gemäß einer ersten bevorzugten Ausführungsform der Erfindung, in einem ersten Zustand.
Fig. 2b zeigt einen Detailausschnitt der Fig. 2a.
Fig. 2c zeigt eine Querschnittsansicht durch einen Ventilkolben der Ventilanordnungen in den Figuren 2a, 2d bis 2g und 3a bis 3c.
Fig. 2d zeigt die Ventilanordnung der Fig. 2a in einem zweiten Zustand.
Fig. 2e zeigt die Ventilanordnung der Fig. 2a in einem dritten Zustand.
Fig. 2f zeigt die Ventilanordnung der Fig. 2a in einem vierten Zustand.
Fig. 2g zeigt die Ventilanordnung der Fig. 2a in einem fünften Zustand.
Fig. 3a zeigt eine Querschnittsansicht durch eine Ventilanordnung einer erfindungsgemäßen Pipettiervorrichtung, gemäß einer zweiten bevorzugten Ausführungsform der Erfindung, in einem ersten Zustand.
Fig. 3b zeigt die Ventilanordnung der Fig. 3a in einem zweiten Zustand.
Fig. 3c zeigt die Ventilanordnung der Fig. 3a in einem dritten Zustand.

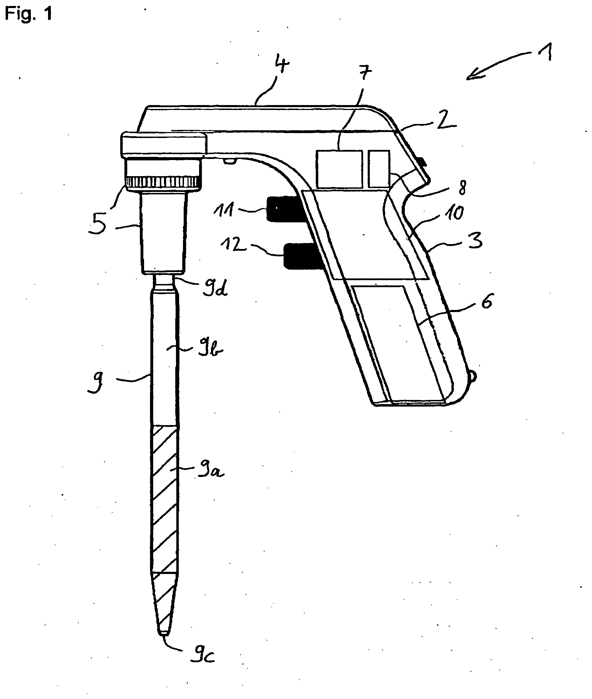

Fig. 1 zeigt ein Ausführungsbeispiel einer erfindungsgemäßen Pipettiervorrichtung 1. Diese Pipettiervorrichtung 1 dient als elektrisch betriebene, manuelle Pipettierhilfe zur Verwendung mit Vollpipetten oder Messpipetten 9 aus Glas oder Kunststoff, die in verschiedenen Größen mit Füllvolumina zwischen 0,1 mL (Milliliter) und 100 mL über den Laborbedarfhandel erhältlich sind.

Zur Beschreibung der Erfindung werden insbesondere Begriffe "oben" und "unten" verwendet. Diese beziehen sich auf eine Anordnung der Pipettiervorrichtung im Raum, bei der ein sich entlang einer Längsachse erstreckender Pipettierbehälter, der mit der Pipettiervorrichtung verbunden ist, parallel zur Richtung der Gravitation, also vertikal angeordnet ist. Die Richtungsangabe "nach unten" bezeichnet die Richtung der Gravitation, die Angabe "nach oben" die entgegengesetzte Richtung.

Die Pipettiervorrichtung 1 ist eine Luftpolster-Pipettiervorrichtung, die insbesondere zum Pipettieren einer fluiden Probe durch Ansaugen in einen Pipettierbehälter mittels einer unter einem ersten Pipettierdruck stehenden Luft dient und/oder zum Abgeben oder Auspressen einer fluiden Probe aus einem Pipettierbehälter mittels einer unter einem zweiten Pipettierdruck stehenden Luft dient. Die Luftpolster-Pipettiervorrichtung verwendet Luft als Arbeitmedium, um den Transport der fluiden Probe in den Pipettierbehälter und aus diesem heraus zu bewirken. Dies wird nachfolgend weiter erläutert:

In Fig. 1 ist die fluide Probe 9a im Pipettierbehälter 9 schraffiert gezeigt. Oberhalb des schraffierten Bereiches befindet sich im Bereich 9b des Pipettierbehälters Luft, die gegenüber dem Umgebungsdruck expandiert ist, also unter einem Unterdruck steht. Der Unterdruck ist der über den Pipettierkanal der Pipettiervorrichtung zum Ansaugen der Probe angelegte Pipettierdruck, der in Fig. 1 die Probe 9a gegen die Gravitationskraft in konstanter Höhe im Behälter hält. Der erste Pipettierdruck zum Ansaugen der Probe ist insbesondere so gewählt, dass er zumindest geringer ist als der Umgebungsdruck, dem die zu pipettierende Probe ausgesetzt ist. Der erste Pipettierdruck zum Ansaugen der Probe ist insbesondere so gewählt, dass er die zum Anheben oder zum Halten der Flüssigkeitssäule 9a im Pipettierbehälter 9 benötigte Gegenkraft aufbringt, die insbesondere im Wesentlichen mindestens so groß ist wie das Gewicht der Flüssigkeitssäule 9a. Der zweite Pipettierdruck zum Abgeben der fluiden Probe 9a aus dem Pipettierbehälter 9 muss mindestens kleiner sein als der erste Pipettierdruck, insbesondere mindestens so klein, dass die Flüssigkeitssäule die durch den Pipettierdruck (Unterdruck) bewirkte Gegenkraft überwindet und gravitationsbedingt abgegeben wird. Zum Auspressen der fluiden Probe aus dem Pipettierbehälter ist der zweite Pipettierdruck insbesondere zumindest größer als der Umgebungsdruck.

Die Pipettiervorrichtung 1 weist als Basiskörper 2 ein Gehäuse 2 auf, das einen Auslegerabschnitt 4 aufweist, an dessen Ende an seiner Unterseite ein Verbindungsabschnitt 5 der Pipettiervorrichtung vorgesehen ist, an dem der Pipettierbehälter 9 lösbar und luftdicht mit dem Verbindungsabschnitt 5 verbunden wird. Der Verbindungsabschnitt ist hier als auswechselbarer, schraubbarer Aufnahmekonus 5 ausgebildet. Er enthält einen Klemmabschnitt (nicht sichtbar) zum kraftschlüssigen Halten des in den Klemmabschnitt einsteckbaren Pipettierbehälters 9 und einen Membranfilter (nicht sichtbar), der zwischen dem Auslegerabschnitt 4 und dem Pipettierbehälter 9 in den Pipettierkanal eingefügt ist. Der Membranfilter verhindert, dass die zu pipettierende, fluide Probe in die Pipettiervorrichtung beziehungsweise deren Ventileinrichtung eindringt. Auf diese Weise bleibt die Funktionsfähigkeit der Pipettiervorrichtung gewährleistet.

Der Basiskörper 2 weist ferner einen pistolenartigen Griffabschnitt 3 auf. Im Inneren dieses Griffabschnitts 3 ist eine Batterieeinheit bzw. Akkumulatoreinheit 6 in einem nach unten offenen oder öffenbaren Ackumulatorfach angeordnet. Die Akkumulatoreinheit 6 kann zum Beispiel einen Nickel-Metallhydrid- oder einen Lithiumpolymer- oder einen Lithium-Ionen/-Polymer-Ackumulator aufweisen, der zum Beispiel eine Betriebsspannung von 9V bereitstellen kann. Die Akkumulatoreinheit 6 kann nach Art eines Pistolenmagazins nach unten aus dem Basiskörper 2 entfernt werden und wird vorzugsweise durch eine Verrastungs-Einrichtung (nicht gezeigt) am Basiskörper gehalten. Im Inneren des Griffabschnitts 3 ist zudem eine durch die Betriebsspannung der Akkumulatoreinheit elektrisch betriebene Pumpeneinrichtung 7 untergebracht, die eine elektrisch betriebene Membranpumpe mit einstellbarer Pumpleistung aufweist. Eine elektrische Steuereinrichtung 8 im Inneren des Gehäuses 2 weist elektrische Schaltkreise auf, insbesondere programmierbare elektrische Schaltkreise. Die Steuereinrichtung 8 ist dazu ausgebildet, mindestens eine Funktion der elektrisch betriebenen Pipettiervorrichtung 1 zu steuern.

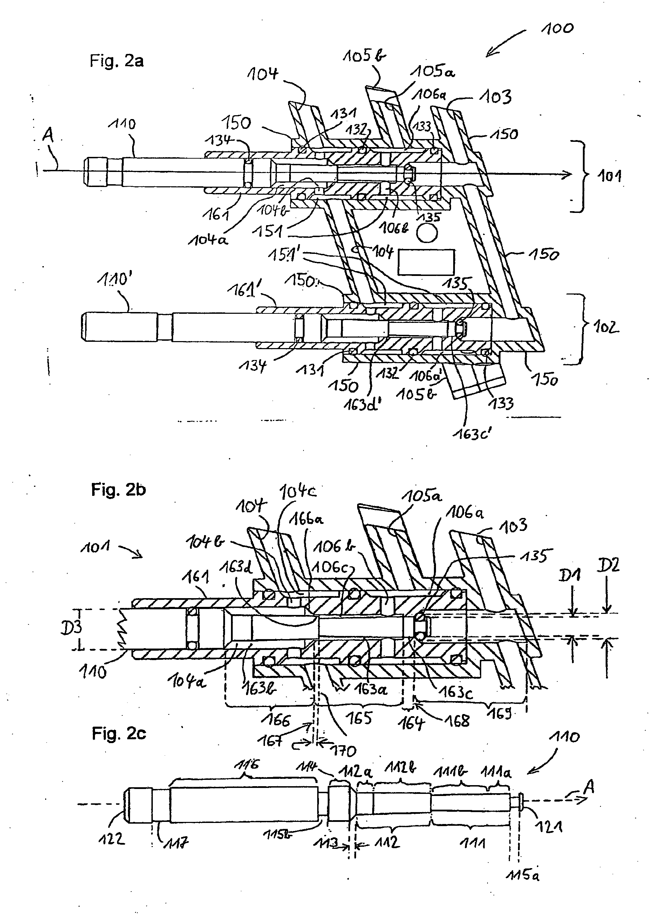

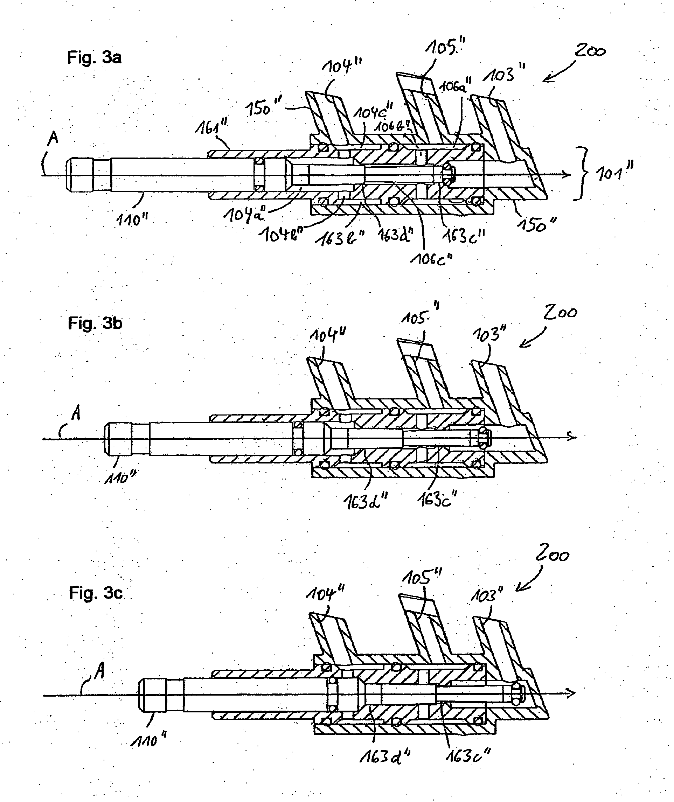

Im Inneren des Griffabschnitts 3 ist ferner die Ventilanordnung 10 mit mindestens einer Ventileinrichtung angeordnet, die insbesondere gemäß Fig. 2a bis 2g oder gemäß Fig. 3a bis 3c ausgebildet sein kann.

Die Pipettiervorrichtung 1 weist zwei Betätigungselemente 11, 12 zum manuellen Betätigen der Ventileinrichtungen der Ventilanordnung 10 auf. Die Betätigungselemente sind als gefedert gelagerte Druccknöpfe ausgebildet, deren Feder gespannt wird, wenn der Druckknopf vom Finger des Benutzers aus seiner Ausgangsstellung in die eingedrückte Stellung bewegt wird. Die Druckknöpfe 11, 12 sind unabhängig voneinander beweglich. Die zwei Betätigungselemente 11, 12 sind parallel übereinander und horizontal beweglich und unverlierbar am Basiskörper 2 angeordnet. Jedes Betätigungselement ist vorzugsweise zumindest in einer Richtung entlang der Achse A im Wesentlichen starr an einem Ventilkolben 110, 110' einer Ventileinrichtung der Ventilanordnung 10, 100 festgelegt, insbesondere bei der Ventilanordnung 100 gemäß der ersten bevorzugten Ausführungsform der Erfindung, und dort insbesondere durch Lagerung des Betätigungsknopfes am Teilabschnitt 117 und Endabschnitt 122 des Ventilkolbens 110.

Vorzugsweise weist die Pipettiervorrichtung eine Sperreinrichtung auf, die das eine Betätigungselement automatisch sperrt, insbesondere verriegelt, wenn das andere Betätigungselement betätigt wird. Die Sperreinrichtung kann ein Riegelelement aufweisen, das durch Betätigung des einen Betätigungselementes mechanisch verschoben wird, um die Beweglichkeit des anderen Betätigungselementes in einem Sperrzustand zu blockieren. Die Sperreinrichtung kann aber auch zur elektrischen Einstellung des Sperrzustands ausgebildet sein.

Das erste Betätigungselement 11 dient zum Ansaugen der fluiden Probe in den Pipettierbehälter. Das zweite Betätigungselement 12 dient zum Abgeben bzw. Auspressen der fluiden Probe aus dem Pipettierbehälter.

Fig. 2a zeigt eine Querschnittsansicht durch eine Ventilanordnung 100 der Pipettiervorrichtung in Fig. 1, gemäß einer ersten bevorzugten Ausführungsform der Erfindung in einem ersten Zustand. In diesem ersten Zustand ist jeweils der Verbindungskanal zwischen der ersten Ventileinrichtung 101 und dem Pipettierkanal 103 durch den Ventilkolben 110, 110' geschlossen, so dass durch die Pumpeneinrichtung keine Druckänderung im Pipettierkanal 103 bewirkt werden kann. Dies ist im Ausführungsbeispiel auch nicht möglich, denn die Pumpeneinrichtung wird hier erst durch Betätigen eines Betätigungselementes aktiviert. Im ersten Zustand der Ventilanordnung 100 kann insbesondere eine Flüssigkeitssäule 9a bei geeignetem Pipettierdruck (Unterdruck) im Pipettierkanal auf konstanter Höhe gehalten werden.

Die Ventilanordnung 100 ist im Ausführungsbeispiel aus verschiedenen Bauteilen hergestellt, die insbesondere zusammengesteckt sind. Diese Bauteile umfassen insbesondere ein Trägerbauteil 150, zwei Kolbenträgerelemente 151, 151', zwei Ventilkolben 110, 110' und sechzehn Dichtungsringe 131, 132, 133, 134, 135. Das Trägerbauteil 150 weist integral einen ersten, im Wesentlichen hohlzylinderförmigen Aufnahmeabschnitt 151 und einen zweiten, im Wesentlichen hohlzylinderförmigen Aufnahmeabschnitt 151' auf. Jeder Aufnahmeabschnitt ist einseitig nach außen hin offen, um das Einsetzen eines ersten Kolbenträgerelementes 161 bzw. eines zweiten Kolbenträgerelementes 161' zu ermöglichen. Ein Kolbenträgerelement 161, 161' weist gegenüber seinem Aufnahmeabschnitt 151, 151' vorzugsweise jeweils eine geringe Spielpassung auf, so dass die kraftschlüssige Befestigung eines Kolbenträgerelementes 161, 161' im Aufnahmeabschnitt 151, 151' jeweils durch das Zusammenpressen der Dichtungsringe, hier der drei Dichtungsringe 131, 132, 133 erfolgt, die jeweils zwischen einem Kolbenträgerelement 161, 161' und seinem Aufnahmeabschnitt 151, 151' angeordnet und jeweils in einer entsprechenden O-Ring-Halterung des Kolbenträgerelementes 161, 161' am jeweiligen Kolbenträgerelement gehalten werden. Die O-Ring-Halterung ist vorliegend als Aussparung im Kolbenträgerelement realisiert. Die Dichtungsringe sind derart dichtend ausgebildet, dass sie im Rahmen des bestimmungsgemäßen Gebrauchs der Pipettiervorrichtung eine luft- und (unter-) druckdichte Abdichtung bewirken.

In dem ersten Kolbenträgerelement 161 ist der erste Ventilkolben 110 teilweise angeordnet und im zweiten Kolbenträgerelement 161' ist der zweite Ventilkolben 110' teilweise angeordnet. Ein Ventilkolben 110, 110' ist jeweils bezüglich einer Achse A rotationssymmetrisch ausgebildet und ist jeweils entlang dieser Achse gegenüber seinem Kolbenträgerelement 161, 161' horizontal translatorisch beweglich angeordnet, insbesondere zwischen der ersten Position und der zweiten Position des Ventilkolbens relativ zu seinem Kolbenträgerelement 161, 161', wobei in der ersten Position der erste Verbindungskanal geschlossen ist und der zweite Verbindungskanal geöffnet, insbesondere vollständig, d.h. insbesondere maximal geöffnet ist, und wobei in der zweiten Position der zweite Verbindungskanal geschlossen ist und der erste Verbindungskanal geöffnet, insbesondere vollständig, d.h. insbesondere maximal geöffnet ist.

Vorzugsweise ist der als Verschlusselement dienende Ventilkolben 110, 110' mit einer Federeinrichtung gefedert am Trägerbauteil 150 oder am Basiskörper 2 der Pipettiervorrichtung gelagert, wobei die Federeinrichtung den Ventilkolben 110, 110' jeweils in die erste Position presst und die durch Bewegen des Verschlusselementes von der ersten Position in die zweite Position gespannt wird.

Die Herstellung der Ventilanordnung 100 ist besonders einfach und kostengünstig, und dabei effizient, weil die genannten Bauteile einfach durch Zusammenstecken montiert werden können, insbesondere ohne die Verwendung spezieller Werkzeuge und/oder komplizierter Befestigungsschritte bei der Montage.

Durch die Bauteile 150, 151, 151', 110, 110', 131, 132, 133, 134, 135 der Ventilanordnung 100 werden im Ausführungsbeispiel die wichtigen Bestandteile der ersten Ventileinrichtung 101 und der zweiten Ventileinrichtung 102 der erfindungsgemäßen Pipettiervorrichtung gebildet:

Fig. 2a zeigt ferner: eine Ventileinrichtung 101, 102 dient jeweils zum Einstellen eines Pipettierdrucks im Pipettierkanal 103. Nachfolgend wird der Aufbau und die Funktion der ersten Ventileinrichtung 101 erläutert, die dem Ansaugen von Luft aus dem Pipettierkanal und damit dem Ansaugen der flüssigen Probe in den mit dem Pipettierkanal seriell verbundenen Pipettierbehälter dient. Der Aufbau der zweiten Ventileinrichtung 102, die dem Abgeben/Auspressen von Luft aus dem Pipettierkanal und damit dem Abgeben/Auspressen der flüssigen Probe aus dem mit dem Pipettierkanal seriell verbundenen Pipettierbehälter dient, gleicht im Wesentlichen dem Aufbau der ersten Ventileinrichtung 101. Es werden zur Bezeichnung von sich entsprechenden Bauteilen der ersten und der zweiten Ventileinrichtung gleiche Bezugszeichen verwendet, die im Falle der zweiten Ventileinrichtung 102 jedoch mit Apostroph versehen sind. Dadurch können Wiederholungen in der Beschreibung vermieden werden.

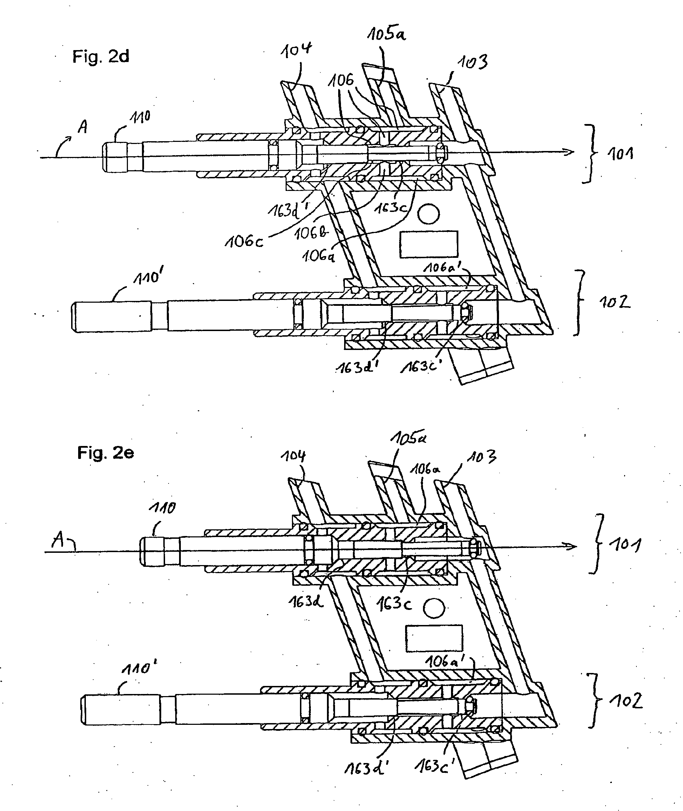

Wie insbesondere im vergrößerten Ausschnitt der Fig. 2a in Fig. 2b zu sehen ist, weist die Ventileinrichtung 101 eine erste Ventilkammer 106 auf, die insbesondere als Unterdruckkammer dient. Die erste Ventilkammer 106 wird insbesondere von einer im Wesentlichen zylinderrohrförmigen Aussparung 106a in der Außenwand des im Wesentlichen hohlzylinderartigen Kolbenträgerelementes 161, zwei Bohrungen 106b des Kolbenträgerelementes 161 und einem Abschnitt 106c des Innenraumbereiches 163 des Kolbenträgerelementes 161, nämlich im Wesentlichen durch dessen Teilabschnitt 163a, gebildet, siehe auch Fig. 2d. Die Bohrungen 106b verbinden jeweils den Hohlraum der Aussparung 106a mit einem hohlen Innenraumbereich 163 des Kolbenträgerelementes 161.

Durch den Innenraumbereich 163 des Kolbenträgerelementes 161 erstreckt sich der Ventilkolben 110, der die Ausdehnung des Innenraumbereichs 163 je nach Lage des Ventilkolbens 110 bezüglich des Kolbenträgerelementes 161 variiert. Der Innenraumbereich 163 ist bezüglich der Achse A im Wesentlichen rotationssymmetrisch ausgebildet. Durch die rotationssymmetrische Bauweise von Ventilkolben und Innenraumbereich des Kolbenträgerelementes ist insbesondere eine hohe Fertigungspräzision erzielbar. Ferner ist die strömungsbedingte Geräuschentwicklung auf diese Weise relativ gering.

Der Innenraumbereich 163 weist die Abschnitte 163a, 163b, 163c und 163d auf. Der erste Teilabschnitt 163a ist in dem im Wesentlichen hohlzylinderförmigen Teilabschnitt 165 des Kolbenträgerelementes 161 in direkter Verbindung mit den Bohrungen 106b ausgebildet. Der zweite Teilabschnitt 163b ist in dem im Wesentlichen zumindest abschnittweise hohlzylinderförmigen Teilabschnitt 166 des Kolbenträgerelementes 161 in direkter Verbindung mit den Bohrungen 106b ausgebildet. Der Teilabschnitt 166 weist einen hohlkegelförmigen Anschlagbereich 166a auf, an dem ein komplementär geformter kegelförmiger Teilabschnitt des Ventilkolbens anschlagen und luft- und druckdicht anliegen kann. Der zweite Teilabschnitt 163b im Bereich des Teilabschnitts 166 des Kolbenträgerelementes 161 wird im ersten Zustand der Ventilanordnung 100 und in der ersten Position des Ventilkolbens 110 dem Innenraumbereich 163 zugerechnet. Mit zunehmendem Schließen des zweiten Verbindungskanals der Ventilkammer 106 zum Bypasskanal 104 hin verringert sich der zweite Teilabschnitt 163b jedoch zunehmend und fällt bei geschlossenem zweiten Verbindungskanal schließlich ganz weg; im Wesentlichen gleichzeitig öffnet sich jedoch der erste Verbindungskanal, so dass der zusammenhängende Innenraumbereich 163 durch einen Teilabschnitt 163c in dem im Wesentlichen hohlzylinderförmigen Teilabschnitt 164 des Kolbenträgerelementes 161 und durch einen Teilabschnitt 163d in dem im Wesentlichen hohlzylinderförmigen Teilabschnitt 169 des Kolbenträgerelementes 161 erweitert wird, der sich an den Teilabschnitt 163c anschließt, der sich ebenfalls zunehmend vergrößert.

Als Verbindungskanal wird insbesondere ein solcher Kanalabschnitt der Ventileinrichtung verstanden, der den wesentlichen Strömungswiderstand beim Strömen der Luft zwischen zwei Druckbereichen mit unterschiedlichen Drücken bildet. Grundsätzlich bildet nämlich das Kanalsystem, umfassend z.B. den ersten Verbindungskanal und weitere mit diesem seriell verbundene Kanalabschnitte der Ventileinrichtung, einen Gesamtwiderstand für die strömende Luft.Der Beitrag der weiteren, seriell verbundenen Kanalabschnitte zum Gesamtwiderstand ist jedoch relativ gering. Dies wird dazu verwendet, um durch Änderung des ersten (oder zweiten) Öffnungsquerschnitts im Bereich des ersten (oder zweiten) Verbindungskanals einen variablen Strömungswiderstand, insbesondere mit geringem Platzbedarf, zu verwirklichen.

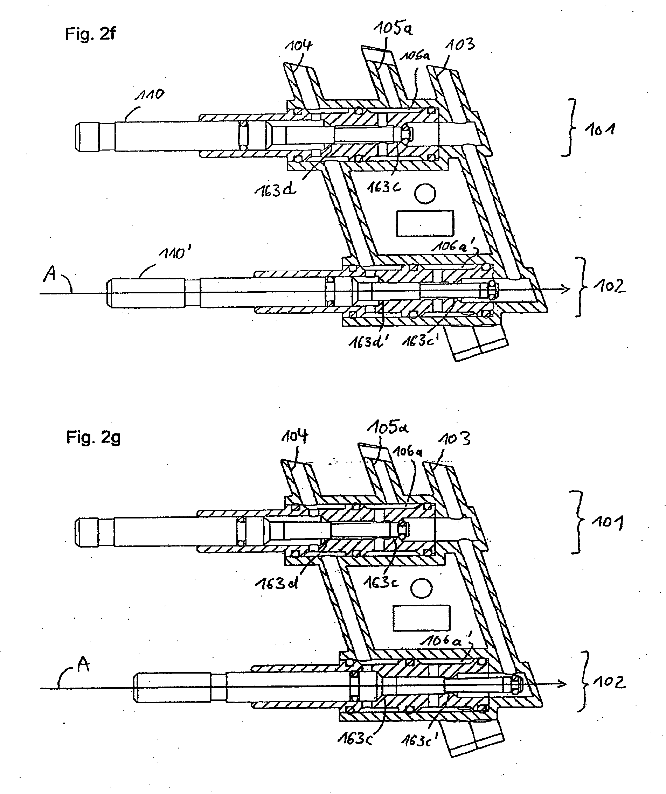

Der erste Verbindungskanal zwischen der Ventilkammer 106 und dem Pipettierkanal wird insbesondere durch den im Wesentlichen rohrwandförmigen Spalt gebildet; der bereits als Teilabschnitt 103c des Innenraumbereich 163 des Kolbenträgerelementes 161 bezeichnet wurde. Der Teilabschnitt 163c wird durch den Hohlraum senkrecht zur Achse A zwischen dem Ventilkolben 110, insbesondere zwischen dessen erstem Drosselabschnitt 111 und dem im Wesentlichen hohlzylinderförmigen Teilabschnitt 164 des Kolbenträgerelementes 161 gebildet. Die größte Engstelle und damit der größte Anteil des Strömungswiderstandes des ersten Verbindungskanals bildet sich im ersten Öffnungsquerschnitt 168 entlang der Linie 168, die in Fig. 2b gezeigt ist. Insbesondere in den Fig. 2a, 2b, 2f und 2g ist der erste Verbindungskanal ganz geschlossen, da dort jeweils der Dichtungsring 135 des Ventilkolbens 163 am hohlkegelförmigen Anschlagbereich 169a des Teilabschnitts 169 des Kolbenträgerelementes 161 anschlägt und dort luft- und druckdicht anliegt. Vorzugsweise wird der Teilabschnitt 163c des Innenraumbereiches 163 des Kolbenträgerelementes 161 als erster Verbindungskanal 163c bezeichnet.

Der erste Verbindungskanal 163c ist variabel und bildet so im Wesentlichen den ersten variablen Strömungswiderstand. Er öffnet sich zunehmend mit zunehmendem Schließen des zweiten Verbindungskanals 163d, wenn der Ventilkolben 110 vom Benutzer zunehmend in das Kolbenträgerelement 161 eingedrückt wird. Entsprechend schließt er sich zunehmend mit zunehmendem Öffnen des zweiten Verbindungskanals 163d, wenn der Ventilkolben 110 durch nachlassenden Fingerdruck des Benutzers und durch die Feder-Rückstellkraft zunehmend aus dem Kolbenträgerelement 161 herausgedrückt wird.

Im erstem Zustand der Ventilanordnung in Fig. 2a ist die Pumpeneinrichtung vorzugsweise nicht aktiv, so dass vorzugsweise zwischen Bypasskanal 104 und Ventilkammer 106, insbesondere im zweiten Verbindungskanal, keine Luft strömt und über den zweiten Verbindungskanal kein Druck abfällt. Es wäre aber möglich, dass die Pumpeneinrichtung auch im ersten Zustand aktiv ist, sie pumpt dann insbesondere die Luft im Kreislauf durch die Kanalbereiche der Ventilanordnung 100, insbesondere im Wesentlichen ohne Netto-Volumen-Luftaustausch mit der Umgebung über den offenen Bypasskanal.

Im zweiten Zustand der Ventilanordnung in Fig. 2d und im dritten Zustand der Ventilanordnung in Fig. 2e ist die Pumpeneinrichtung aktiv. Es entsteht dann - oder existiert dann - in dem als Saugleitung 105a dienenden Pumpkanal 105a ein Unterdruck gegenüber dem Umgebungsdruck, der z.B. in der zur Umgebung offenen Bypassleitung 104 anliegt. Im Falle der Aktivität der zweiten Ventileinrichtung 102 entsteht - oder existiert- ein Überdruck gegenüber dem Umgebungsdruck in dem als Druckleitung 105b dienenden Pumpkanal 105b, der mit dem Ventilkammerabschnitt 106a' verbunden ist. Dieser Unterdruck (oder Überdruck) liegt jeweils im Wesentlichen als Kammerdruck in der Ventilkammer 106 an. Zwischen dem Bypasskanal 104 und der Ventilkammer 106 liegt dann ein Druckabfall vor, der durch den Gesamtwiderstand der seriell verbundenen Kanalabschnitte zwischen dem Pumpeneingang (bzw. dem Pumpenausgang im Fall der zweiten Ventileinrichtung 102) und der Umgebung gebildet wird, wobei der Gesamtwiderstand aber im Wesentlichen durch den Teilabschnitt 163d des Innenraumbereiches 163 gebildet wird.

Der Teilabschnitt 163d ist ein im Wesentlichen rohrwandförmiger Spalt, der sich in dem im Wesentlichen hohlzylinderförmigen Teilabschnitt 170 des Kolbenträgerelementes 161 ausbildet. Der Teilabschnitt 163d des Innenraumbereiches 163 des Kolbenträgerelementes 161 wird definiert als der Hohlraum, der sich senkrecht zur Achse A zwischen dem Ventilkolben 110, insbesondere zwischen dessen zweitem Drosselabschnitt 112 und dem im Wesentlichen hohlzylinderförmigen Teilabschnitt 165 des Kolbenträgerelementes 161 ausbildet. Vorzugsweise wird der Teilabschnitt 163d des Innenraumbereiches 163 des Kolbenträgerelementes 161 als zweiter Verbindungskanal 163d bezeichnet.

Der zweite Verbindungskanal 163d ist variabel und bildet so im Wesentlichen den zweiten variablen Strömungswiderstand. Der zweite Verbindungskanal schließt sich zunehmend mit zunehmendem Öffnen des ersten Verbindungskanals 163c, wenn der Ventilkolben 110 zunehmend in das Kolbenträgerelement 161 eingedrückt wird. Die größte Engstelle und damit der größte Anteil des Strömungswiderstandes des zweiten Verbindungskanals bildet sich im zweiten Öffnungsquerschnitt 168 entlang der Linie 167, die in Fig. 2b gezeigt ist.

Der Bypasskanal 104 enthält im Wesentlichen insbesondere auch die rohrwandförmige Aussparung 104c in der Außenwand des Kolbenträgerelementes 161, die als Hohlraum zwischen Kolbenträgerelement 161 und Aufnahmebereich 151 des Trägerbauteils 150 angeordnet ist, und die seitlich entlang der Achse A durch die beiden Dichtungsringe 131 und 132 abgedichtet wird. Der Bypasskanal 104 enthält im Wesentlichen insbesondere auch den rohrwandförmigen Hohlraum 104a und die zwei Bohrungen 104b, die den Hohlraum 104c mit dem Hohlraum 104a verbinden.

Im ersten Zustand der Ventilanordnung in Fig. 2a ist der zweite Verbindungskanal 163d vollständig geöffnet und der erste Verbindungskanal 163c vollständig geschlossen, so dass der Kammerdruck der Ventilkammer 106 in minimaler Weise vom Umgebungsdruck im Bypasskanal 104 abweicht. Der Ventilkolben 110 befindet sich gegenüber dem Kolbenträgerelement 161 in der ersten Position.

Im zweiten Zustand der Ventilanordnung in Fig. 2d stellt der zweite Verbindungskanal 163d einen Strömungswiderstand dar, der den Gesamtwiderstand für die zwischen dem Bypasskanal 104 und der Ventilkammer 106 strömenden Luft dominiert und der sich mit zunehmendem Schließen des zweiten Verbindungskanals erhöht. Im dritten Zustand der Ventilanordnung in Fig. 2e ist der zweite Verbindungskanal 163d vollständig geschlossen. Ferner stellt im zweiten Zustand der Ventilanordnung in Fig. 2d der erste Verbindungskanal 163c einen Strömungswiderstand dar, der den Gesamtwiderstand für die zwischen dem Pipettierkanal 103 und der Ventilkammer 106 strömende Luft dominiert und der sich mit zunehmendem Öffnen des ersten Verbindungskanals reduziert. Der Ventilkoben 110 befindet sich in diesem zweiten Zustand der Ventilanordnung 100 in einer dritten Position, die zwischen der ersten Position und der zweiten Position liegt.

Je weiter der Ventilkolben 110 in die erste Position bewegt wird, desto größer ist der Luftanteil, der durch den Bypasskanal 104 gezogen wird. Dadurch ist der Anteil der Luft, der durch den Pipettierkanal gesaugt wird, entsprechend geringer. Dies hat zur Folge, dass die Aufzugsgeschwindigkeit (Volumen pro Zeit) der fluiden Probe in den mit dem Pipettierkanal verbundenen Pipettierbehälter und die maximale Flüssigkeitssäule im Pipettierbehälter aufgrund der auf die Flüssigkeitssäule wirkenden Gravitation gering sind. Entsprechend gilt, je weiter der Ventilkolben 110 in die zweite Position bewegt wird, desto geringer ist der Luftanteil, der durch den Bypasskanal 104 gezogen wird. Dadurch ist der Anteil der Luft, der durch den Pipettierkanal gesaugt wird, entsprechend größer. Wird der Ventilkolben 110 maximal in das Kolbenträgerelement 161 hinein bewegt (zweite Position), so wird im Wesentlichen keine Luft mehr über die Bypassleitung 104 gezogen. Dadurch erreicht die aus dem Pipettierkanal 103 angesaugte Luftmenge einen maximalen Wert. Dies hat zur Folge, dass die Aufzugsgeschwindigkeit und die Flüssigkeitssäule im Pipettierbehälter jeweils maximal sind. Zusätzlich zu der Steuerung der Aufzugsgeschwindigkeit über den Bypasskanal 104 bewirkt die Querschnittsänderung, insbesondere die konische Form mindestens eines Teilabschnitts (111, 112) des Ventilkolbens 110, eine Regulierung der Luftgeschwindigkeit auf dem Weg des Luftstroms vom Eintritt 106b in den Innenraumbereich 163 des Kolbenträgerelementes 161 zum Pipettierkanal 103. Diese Funktionalität der Ventilanordnung wird insbesondere nachfolgend noch beschrieben. Hierdurch kann die Aufzugsgeschwindigkeit der Flüssigkeitssäule in den Pipettierbehälter noch feiner dosiert werden.

Falls, ausgehend von dem zweiten Zustand der Ventilanordnung 100 in Fig. 2d, der Ventilkolben 110 vom Benutzer aus der dritten Position wieder in die erste Position überführt wird, um den Ansaugvorgang zu beenden, ist vorzugsweise vorgesehen, dass die Pumpleistung in vorbestimmter Weise durch die elektrische Steuereinrichtung geregelt wird, um in Abhängigkeit von dem ersten Strömungswiderstand im ersten Verbindungskanal die Pumpleistung so einzustellen, dass der Pipettierdruck konstant bleibt, bis die erste Position des Ventilkolbens wieder erreicht ist. Dadurch bleibt die vom Benutzer angesaugte Flüssigkeitssäule im Pipettierbehälter bei konstantem Volumen. Insbesondere ist möglich, dass bei einer Bewegung des Kolbens von der dritten Position in die erste Position die Pumpleistung, die bei der dritten Position vorliegt, solange zumindest konstant gehalten wird, bis die erste Position erreicht ist.

Im dritten Zustand der Ventilanordnung in Fig. 2e ist der erste Verbindungskanal 163c vollständig geöffnet und der zweite Verbindungskanal 163d vollständig geschlossen, so dass der Kammerdruck der Ventilkammer 106 in maximaler Weise an den Pipettierkanal 103 angelegt wird. Der Ventilkolben 110 befindet sich gegenüber dem Kolbenträgerelement 161 in der zweiten Position.

Ferner ist im ersten, zweiten und dritten Zustand der Ventilanordnung in Fig. 2a, 2d und 2e der zweite Verbindungskanal 163d' der zweiten Ventileinrichtung 102 vollständig geöffnet und der erste Verbindungskanal 163c' vollständig geschlossen, so dass der Kammerdruck der Ventilkammer 106' in minimaler Weise vom Umgebungsdruck im Bypasskanal 104 abweicht. Der Ventilkolben 110' der zweiten Ventileinrichtung 102 befindet sich gegenüber dem Kolbenträgerelement 161' in der ersten Position.

Im vierten Zustand der Ventilanordnung in Fig. 2f stellt der zweite Verbindungskanal 163d' der zweiten Ventileinrichtung 102 einen Strömungswiderstand dar, der den Gesamtwiderstand für die zwischen dem Bypasskanal 104 und der Ventilkammer 106' strömende Luft dominiert und der sich mit zunehmendem Schließen des zweiten Verbindungskanals erhöht. Im fünften Zustand der Ventilanordnung in Fig. 2e ist der zweite Verbindungskanal 163d' dann vollständig geschlossen. Ferner stellt im vierten Zustand der Ventilanordnung in Fig. 2d der erste Verbindungskanal 163c' einen Strömungswiderstand dar, der den Gesamtwiderstand für die zwischen dem Pipettierkanal 103 und der Ventilkammer 106' strömende Luft dominiert und der sich mit zunehmendem Öffnen des ersten Verbindungskanals reduziert.

Im fünften Zustand der Ventilanordnung in Fig. 2g ist der erste Verbindungskanal 163c' der zweiten Ventileinrichtung 102 vollständig geöffnet und der zweite Verbindungskanal 163d' vollständig geschlossen, so dass der Kammerdruck der Ventilkammer 106' in maximaler Weise an den Pipettierkanal 103 angelegt wird. Der Ventilkolben 110' befindet sich gegenüber dem Kolbenträgerelement 161 in der zweiten Position.

Ferner ist im ersten, vierten und fünften Zustand der Ventilanordnung in Fig. 2a, 2f und 2g der zweite Verbindungskanal 163d der ersten Ventileinrichtung 101 vollständig geöffnet und der erste Verbindungskanal 163c vollständig geschlossen, so dass der Kammerdruck der Ventilkammer 106 in minimaler Weise vom Umgebungsdruck im Bypasskanal 104 abweicht. Der Ventilkolben 110 der ersten Ventileinrichtung 101 befindet sich gegenüber dem Kolbenträgerelement 161 in der ersten Position.

Der Pipettierdruck im Pipettierkanal 103 wird jeweils durch eine Ventileinrichtung eingestellt, während die andere Ventileinrichtung diesen im Wesentlichen nicht beeinflusst, indem insbesondere der erste Verbindungskanal der anderen Ventileinrichtung geschlossen ist. Der zweite Verbindungskanal oder der zweite Öffnungsquerschnitt 167 ist insbesondere in der dritten Position, die zwischen der Stellung des Ventilkolbens in der ersten/und oder zweiten Position liegt, vorzugsweise zumindest teilweise geöffnet, und ist insbesondere in einer dritten Position, die näher an der ersten Position liegt als an der ersten Position, vorzugsweise zu mindestens der Hälfte des maximalen Öffnung oder des maximalen Öffnungsvolumens geöffnet. Durch diese jeweilige Bypass-Verbindung der Ventilkammer der Ventilanordnung 100 mit der Umgebung wird insbesondere erreicht, dass Druckschwankungen in der Ventilkammer, die durch die Pumpeneinrichtung entstehen können, nicht voll auf den Pipettierkanal und damit auf die Flüssigkeitssäule übertragen werden, sondern über den Bypass anteilig an die Umgebung abgegeben und damit insbesondere bei geringen Auslenkungen des Ventilkolbens aus der ersten Position und insbesondere bei geringen Pumpenleistungen und/oder Pumpenfrequenzen effizient gedämpft werden. Bei voller Pumpleistung können selbst Pipettierbehälter mit kleinem Dosiervolumen sehr genau befüllt werden. Auf diese Weise ist ein genaueres und komfortableres Pipettieren möglich.

Die jeweils aktive Ventileinrichtung 101, 102 ist so ausgebildet, dass zur Erzeugung des gewünschten Pipettierdrucks in dem Pipettierkanal 103,der Kammerdruck dosiert auf den Pipettierkanal und die Bypassleitung verteilt wird. Dazu weist insbesondere der erste Verbindungskanal 163c, 163c' jeweils einen variablen ersten Strömungswiderstand auf sowie insbesondere der zweite Verbindungskanal 163d, 163d' jeweils einen variablen zweiten Strömungswiderstand auf, wobei, zur Erzeugung des gewünschten Pipettierdrucks in dem Pipettierkanal 103, der erste Strömungswiderstand und der zweite Strömungswiderstand jeweils von der betreffenden Ventileinrichtung 101, 101' angepasst werden. Der erste Verbindungskanal und der zweite Verbindungskanal sind insbesondere parallel zueinander mit der Ventilkammer verbunden und insbesondere mit dem einen Bypasskanal verbunden.

Der Ventilkolben 110, 110' ist so ausgebildet ist, dass er den ersten Verbindungskanal 163c, 163c' in einer dritten Position weiter verschließt als in einer vierten Position, und insbesondere gleichzeitig den zweiten Verbindungskanal 163d, 163d' in der vierten Position weiter schließt als in der dritten Position, wenn der Ventilkolben in einer dritten Position oder vierten Position angeordnet ist, die insbesondere zwischen der ersten Position und zweiten Position liegt. Auf diese Weise wird der erste und/oder der zweite Strömungswiderstand variabel gestaltet. Vorzugsweise liegt die dritte Position liegt näher an der ersten Position und die zweite Position liegt näher an der vierten Position. Dies kann insbesondere erreicht werden, indem eine Ventileinrichtung eine Drosselfunktion aufweist, insbesondere eine zweifache Drosselfunktion aufweist, wobei die beiden Drosselfunktionen funktionell aufeinander abgestimmt sind. Die Drosselfunktion wird im Ausführungsbeispiel erreicht, indem der erste Strömungswiderstand des ersten Verbindungskanals und der zweite Strömungswiderstand des zweiten Verbindungskanals jeweils variabel sind.

Der erste Strömungswiderstand ist hier variabel, indem ein erster Teilabschnitt 164 des hier im Wesentlichen hohlzylinderförmigen Kolbenträgerelementes 161 einen ersten minimalen Innendurchmesser D1 aufweist, und der sich entlang der Achse A erstreckende Ventitkoiben 110 einen ersten Teilabschnitt 111, den ersten Drosselabschnitt 111, mit entlang der Achse A veränderlichem Außendurchmesser d1, aufweist, der insbesondere zum Ende des Ventilkolbens hin gemäß einem Steigungsverhalten δd1 / δA, also der Steigung der mathematischen Funktion d1 (A), zunimmt. Über die Gestaltung der Außenkontur des Teilabschnitts 111, insbesondere durch die konstruktive Anpassung von d1 (A), kann die Variabilität des ersten Strömungswiderstandes und insbesondere das Pipettierverhalten in der gewünschten Weise beeinflusst werden. Zu diesem Zweck ist vorzugsweise vorgesehen, dass ein erster Teilbereich 111a des ersten Drosselabschnitts 111, der näher am ersten Ende 121 des Ventilkolbens 110 angeordnet ist als der entlang der Achse A darauf folgende Teilbereich 111b des Drosselabschnitts, eine größere Steigung aufweist als der Teilbereich 111a.

Der zweite Strömungswiderstand ist hier auch variabel, indem ein zweiter Teilabschnitt 170 des hier im Wesentlichen hohlzylinderförmigen Kolbenträgerelementes 161 einen zweiten minimalen Innendurchmesser D2 aufweist - wobei hier vorzugsweise D2 > D1 -, und der sich entlang der Achse A erstreckende Ventilkolben 110 einen zweiten Teilabschnitt 112, den zweiten Drosselabschnitt 112, mit entlang der Achse A veränderlichem Außendurchmesser d2, aufweist, der insbesondere zum zweiten Ende 122 des Ventilkolbens hin gemäß einem Steigungsverhalten δd2 / δA, also der Steigung der mathematischen Funktion d2 (A) zunimmt und, umgekehrt, zum ersten Ende 121 hin abnimmt. Über die Gestaltung der Außenkontur des Teilabschnitts 112, insbesondere durch die konstruktive Anpassung von d2 (A), kann die Variabilität des zweiten Strömungswiderstandes und insbesondere das Pipettierverhalten in der gewünschten Weise beeinflusst werden. Zu diesem Zweck ist vorzugsweise vorgesehen, dass ein erster Teilbereich 112a des ersten Drosselabschnitts 112, der näher am zweiten Ende 122 des Ventilkolbens 110 angeordnet ist als der entlang der Achse A darauf folgende Teilbereich 112b des Drosselabschnitts 112, eine mathematisch größere Steigung δd2 / δA, nämlich ein geringeres Gefälle, aufweist als der Teilbereich 112a.

Insbesondere kann durch Abstimmung des ersten Drosselbereiches und des zweiten Drosselbereiches das gewünschte Pipettierverhalten der Pipettiervorrichtung erzielt werden, insbesondere durch Anpassung von deren Außenkontur, insbesondere durch Anpassung des Steigungsverhaltens Steigung δd / δA des Außendurchmessers des Drosselbereiches, und/oder durch Anpassung des Innendurchmessers D1 des ersten und/oder des Innendurchmessers D2 des zweiten Teilabschnitts 164, 170 des hier im Wesentlichen hohlzylinderförmigen Kolbenträgerelementes 161, insbesondere durch Anpassung des Steigungsverhaltens δD / δA der jeweiligen Innendurchmesser.

Allgemein weist der Ventilkolben vorzugsweise mindestens einen ersten im Wesentlichen konusförmigen Teilabschnitt (111) auf, mit dem insbesondere durch Änderung des freien ersten Öffnungsquerschnitts (168) des ersten Verbindungskanals (163c) der erste Strömungswiderstand variierbar ist. Allgemein weist der Ventilkolben vorzugsweise mindestens einen zweiten im Wesentlichen konusförmigen Teilabschnitt (112) auf, mit dem insbesondere durch Änderung des freien ersten Öffnungsquerschnitts (167) des zweiten Verbindungskanals (163d) der zweite Strömungswiderstand variierbar ist. Der erste Verbindungskanal und der zweite Verbindungskanal sind insbesondere parallel zueinander mit der Ventilkammer verbunden und insbesondere mit dem einen Bypasskanal verbunden. Der Abfall des Kammerdrucks über den ersten und zweiten Verbindungskanal kann jeweils entweder mathematisch abgeschätzt werden und/oder experimentell bestimmt werden.

Das zweite Ende eines Ventilkolbens liegt näher am Betätigungselement der Pipettiervorrichtung als das erste Ende des Ventilkolbens.

Der Ventilkolben 110 weist ferner einen kegelförmigen Anschlagbereich 113 zum Schließen des zweiten Verbindungskanals 163d auf, einen Schließabschnitt 114, der einen Außendurchmesser d3 hat, der im Wesentlichen dem maximalen Innendurchmesser D3 des Teilabschnitts 166 des Kolbenträgerelementes 161 entspricht, so dass im Wesentlichen d3 = D3, wobei vorzugsweise D3 > D2. Der Ventilkolben 110 weist ferner die kreisringförmige Aussparung 115a zur Halterung des Dichtungsringes 135 auf, die nahe dem ersten Ende 121 des Ventilkolbens angeordnet ist. Der Ventilkolben 110 weist ferner die kreisringförmige Aussparung 115b zur Halterung des Dichtungsringes 134 auf, die nahe dem Schließabschnitt 114 des Ventilkolbens angeordnet ist. Der Ventilkolben 110 weist ferner den Verlängerungsabschnitt 116 auf, über den die Drosselabschnitte zum Ändern des ersten und zweiten Strömungswiderstandes von außerhalb der Pipettiervorrichtung durch Betätigung eines Betätigungselementes vom Benutzer bewegt werden. Der Ventilkolben 110 ist über die Aussparung 117, der als Widerlager für die Federung des Ventilkolbens 110 dient, gefedert am Basiskörper 2 gelagert. Zwischen Feder und Basiskörper 2 ist vorzugsweise ein Flanschabschnitt des Betätigungselementes im Gehäuse 2 gelagert. Das Betätigungselement ist vorzugsweise in einem Führungsabschnitt des Basiskörpers 2 zur Durchführung der Translation entlang der Achse A geführt.

Eine weitere Abstimmung des Pipettierverhaltens erfolgt bei der Pipettiervorrichtung 1, indem die Pumpleistung stufenlos variabel ist. Dazu weist der Basiskörper 2 mindestens einen Hallsensor als Positionssensor (nicht gezeigt) auf, durch den die Position des Ventilkolbens gegenüber dem Basiskörper bzw. gegenüber dem Kolbenträgerelement 161 erfasst wird. Die elektrische Steuereinrichtung 8 ist dazu ausgebildet, die Pumpleistung in Abhängigkeit von der gemessenen Position und/oder gemessenen Geschwindigkeit des Ventilkolbens 110 entlang der Achse A zu ändern, insbesondere die Pumpleistung zu vergrößern, wenn der Ventilkolben vom Benutzer durch fortschreitendes Eindrücken des Betätigungselementes weiter in das Innere des Kolbenträgerelementes 161 gedrückt wird. Auf diese Weise wird die Verwendung der Pipettiervorrichtung noch effizienter, insbesondere komfortabler, und die Abstimmung der Pumpleistung wird noch flexibler. Insbesondere kann die Pumpe mittels des Positionssensors oder eines anderen, z.B. mechanischen Schalters sofort eingeschaltet werden. Der mechanische Schalter kann z.B. durch eine Lasche am Betätigungselement automatisch ausgelöst werden, wenn der Betätigungsknopf vom Benutzer aus der Ausgangsposition herausgedrückt wird, vorzugsweise wenn der Ventilkolben vom Benutzer aus der ersten Position heraus bewegt wird. Dies gilt zumindest für das Betätigungselement zum Ansaugen der Probe. Beim Betätigungselement zum Abgeben der Probe ist vorzugsweise vorgesehen, dass die Pumpe erst aktiv wird, wenn eine bestimmte dritte Position des Ventilkolbens 110', also Eindrücktiefe, erreicht ist, da vor Erreichen der dritten Position die Abgabe gravitationsbedingt erfolgt und keinen Überdruck benötigt. Die durch Öffnen des zweiten Verbindungskanals gesteuerte Probenabgabeist effizient und komfortabel, und die Pumpaktivität kann die Abgabe zusätzlich in gewünschtem Maße beschleunigen.

Ein weiterer besonderer Vorteil der erfindungsgemäßen Pipettiervorrichtung gemäß der ersten bevorzugten Ausführungsform mit der Ventilanordnung 100 ist folgender: Die Pipettiervorrichtung ist so ausgebildet, dass durch die Bypassleitung 104 im Wesentlichen nur das Luftvolumen mit der Umgebung ausgetauscht wird, das dem Luftvolumen entspricht, dass zum Einstellen des gewünschten Pipettierdrucks in dem Pipettierkanal benötigt wird, wobei ein Luftaustausch vorzugsweise im Wesentlichen nur beim Einstellen des Pipettierdrucks erfolgt und vorzugsweise im Wesentlichen nicht erfolgt, wenn der gewünschte Pipettierdruck erreicht ist. Dieses ausgetauschte Luftvolumen stellt insbesondere einen Nettofluss zwischen den Strömungsbereichen der Ventilanordnung 100 und der Umgebung dar, also entweder den Netto-Volumen-Bezug von Luft aus der Umgebung oder die Netto-Volumen-Abgabe von Luft an die Umgebung. Auf diese Weise gelangt weniger - potentiell schädliche, z.B. feuchte - Außenluft in die Kanalbereiche der Ventilanordnung 100 und umgekehrt wird weniger Luft aus der Ventilanordnung 100 an die Umgebung abgegeben, was für den Benutzer komfortabler ist.

Dies wird im Ausführungsbeispiel insbesondere erreicht, indem die Pipettiervorrichtung genau eine Pumpeneinrichtung, mit z.B. genau einer Membranpumpe, und mindestens einen ersten - oder genau einen ersten - Pumpkanal 105a für die angesaugte Luft aufweist, der saugseitig mit der Pumpeneinrichtung verbunden ist und einen zweiten - oder genau einen zweiten - Pumpkanal 105b für die ausgegebene Luft aufweist, der druckseitig mit der Pumpeneinrichtung verbunden ist, wobei der erste Pumpkanal mit der ersten Ventilkammer 106 der ersten Ventileinrichtung 101 verbunden ist und der zweite Pumpkanal mit der zweiten Ventilkammer 106' der zweiten Ventileinrichtung 102 verbunden ist, so dass mittels der einen Pumpeneinrichtung sowohl der Ansaugdruck in der ersten Ventilkammer 106 als auch der Abgabedruck in der zweiten Ventilkammer 106' herstellbar ist.

Fig. 3a zeigt eine Querschnittsansicht durch eine Ventilanordnung 200 einer anderen erfindungsgemäßen Pipettiervorrichtung, gemäß einer zweiten bevorzugten Ausführungsform der Erfindung, in einem ersten Zustand. Die Bauteile der Ventilanordnung 200 ähneln jenen der Ventilanordnung 100 und werden zur Unterscheidung mit einem Anführungszeichen bezeichnet. Die Pipettiervorrichtung weist insbesondere eine Pumpeneinrichtung mit umkehrbarer Pumprichtung auf. Dadurch kann insbesondere mit einer einzigen Ventilträgereinrichtung 101" Die Pumpeneinrichtung könnte aber z.B. auch zwei Pumpen mit jeweils konstanter Pumprichtung verwenden oder eine andere geeignete Pumpeneinrichtung aufweisen.

Im Unterschied zur Ventilanordnung 100 ist bei der Ventilanordnung 200 der nicht direkt mit der Ventilkammer 106" verbundene Pumpkanal (nicht gezeigt) vorzugsweise immer direkt mit der Umgebung, insbesondere mit dem Bypasskanal 104", insbesondere mit dem Teilabschnitt 104c" des Innenraumbereiches 163" des Kolbenträgerelementes 161" oder dem Hohlraum 104a", verbunden. Der Bypasskanal 104" ist auch hier direkt, also ohne einen nennenswerten Druckabfall - d.h. insbesondere im Vergleich zu dem Druckabfall gemäß dem ersten oder dem zweiten Strömungswiderstand -, mit der Umgebung verbunden. In diesem ersten Zustand der Ventilanordnung 200 ist der erste Verbindungskanal 163c" geschlossen und der zweite Verbindungskanal 163d" maximal geöffnet. Der Ventilkolben 110" befindet sich in der ersten Position.

Fig. 3b zeigt die Ventilanordnung der Fig. 3a in einem zweiten Zustand. Je nach Pumprichtung wird hier die Pipettierleistung abgestimmt, indem der erste Verbindungskanal 163c" und der zweite Verbindungskanal 163d" jeweils beide teilweise geöffnet sind. Der Ventilkolben befindet sich in einer Position zwischen der ersten und zweiten Position.

Fig. 3c zeigt die Ventilanordnung der Fig. 3a in einem dritten Zustand. Es wird die Pipettierleistung maximiert, indem mit maximaler Leistung Luft aus dem Pipettierkanal 103" angesaugt oder ausgepresst wird, je nach Pumprichtung. Der Ventilkolben 110" befindet sich in der zweiten Position.

Auch bei der zweiten bevorzugten Ausführungsform der Erfindung wird durch die Bypass-Verbindung 104" der Ventilkammer mit der Umgebung insbesondere erreicht, dass Druckschwankungen in der Ventilkammer, die durch die Pumpeneinrichtung entstehen können, nicht voll auf den Pipettierkanal und damit auf die Flüssigkeitssäule übertragen werden, sondern über den Bypass anteilig an die Umgebung abgegeben und damit insbesondere bei geringen Auslenkungen des Ventilkolbens aus der ersten Position und insbesondere bei geringen Pumpenleistungen und/oder Pumpenfrequenzen effizient gedämpft werden. Bei voller Pumpleistung können selbst Pipettierbehälter mit kleinem Dosiervolumen sehr genau befüllt werden. Auf diese Weise ist auch hier ein genaueres und komfortableres Pipettieren möglich.

## Patentansprüche

1. Pipettiervorrichtung (1) zum Pipettieren einer fluiden Probe (9a) durch Ansaugen in einen Pipettierbehälter (9) mittels einer unter einem Pipettierdruck stehenden Luft (9b), aufweisend
- eine Ventilanordnung (10; 100; 200) mit mindestens einer Ventileinrichtung (101; 102; 101") zum Einstellen eines Pipettierdrucks, wobei die Ventileinrichtung eine Ventilkammer (106; 106'; 106") aufweist;
- mindestens eine Pumpeneinrichtung (7), die zur Erzeugung eines Kammerdrucks in der Ventilkammer mit der Ventilkammer verbunden ist;
- einen Pipettierkanal (103; 103"), mit dem der Pipettierbehälter verbindbar ist und **dadurch gekennzeichnet dass** die Pipettiervorrichtung (1)
- einen Bypasskanal (104; 104"), der zur Umgebung offen ist, aufweist;
- wobei der Pipettierkanal und der Bypasskanal jeweils mit der Ventilkammer verbunden sind;
- und wobei die mindestens eine Ventileinrichtung so ausgebildet ist, dass, zur Erzeugung des gewünschten Pipettierdrucks in dem Pipettierkanal, der Kammerdruck von der Ventileinrichtung auf den Pipettierkanal und den Bypasskanal verteilt wird;und wobei der Pipettierkanal (103; 103") Ober einen ersten Verbindungskanal (163c; 163c'; 163c") mit variablem Strömungswiderstand mit der Ventilkammer (106; 106'; 106") verbunden ist und der Bypasskanal (104; 104") über einen zweiten Verbindungskanal (163d; 163d'; 163d") mit variablem Strömungswiderstand mit der Ventilkammer (106; 106'; 106") verbunden ist, wobei, zur Erzeugung des gewünschten Pipettierdrucks in dem Pipettierkanal, der erste Strömungswiderstand und der zweite Strömungswiderstand von der Ventileinrichtung angepasst werden.

2. Pipettiervorrichtung gemäß Anspruch 1, wobei die Ventileinrichtung ein Verschlussträgerelement (161; 161'; 161") aufweist und mindestens ein Verschlusselement (110; 110'; 110") aufweist, das gegenüber dem Verschlussträgerelement zumindest zwischen einer ersten Position und einer zweiten Position translatorisch beweglich angeordnet ist, wobei das Verschlusselement in der ersten Position den ersten Verbindungskanal schließt und in der zweiten Position nicht verschließt und wobei das Verschlusselement in der ersten Position den zweiten Verbindungskanal nicht verschließt und in der zweiten Position verschließt.

3. Pipettiervorrichtung gemäß Anspruch 2, wobei das Verschlusselement so ausgebildet ist, dass es den ersten Verbindungskanal und den zweiten Verbindungskanal teilweise öffnet, wenn es in einer dritten Position zwischen der ersten und der zweiten Position angeordnet ist.

4. Pipettiervorrichtung gemäß Anspruch 2 oder 3, wobei das Verschlusselement so ausgebildet ist, dass es den ersten Verbindungskanal in einer dritten Position weiter verschließt als in einer vierten Position, und den zweiten Verbindungskanal in der vierten Position weiter schließt als in der dritten Position, wenn das Verschlusselement in einer dritten Position oder vierten Position angeordnet ist, die zwischen der ersten Position und zweiten Position liegt.

5. Pipettiervorrichtung gemäß mindestens einem der Ansprüche 2 bis 4, die manuell bedienbar ist, wobei die Ventileinrichtung dazu ausgebildet ist, dass die Position des Verschlusselementes vom Benutzer bestimmt wird, um den gewünschten Pipettierdruck in der Pipettierleitung einzustellen.

6. Pipettiervorrichtung gemäß mindestens einem der vorherigen Ansprüche 2 bis 5, wobei die mindestens eine Ventileinrichtung eine Ventilkammer aufweist und wobei das Verschlusselement ein Ventilkolben (110; 110'; 110") ist, der sich entlang einer Achse A durch die Ventileinrichtung erstreckt und gegenüber dem Verschlussträgerelement entlang der Achse A translatorisch zumindest zwischen einer ersten Position und einer zweiten Position beweglich ist.

7. Pipettiervorrichtung gemäß Anspruch 6, wobei der erste Verbindungskanal einen ersten Öffnungsquerschnitt aufweist und der Ventilkolben einen ersten Kolbenabschnitt aufweist, der beweglich im ersten Öffnungsquerschnitt angeordnet ist, um diesen zwischen der ersten und zweiten Position zumindest teilweise oder vollständig zu verschließen und
wobei der zweite Verbindungskanal einen zweiten Öffnungsquerschnitt aufweist und der Ventilkolben einen zweiten Kolbenabschnitt aufweist, der beweglich im zweiten Öffnungsquerschnitt angeordnet ist, um diesen zwischen der zweiten und ersten Position zumindest teilweise oder vollständig zu verschließen.

8. Pipettiervorrichtung gemäß Anspruch 7, wobei der erste Kolbenabschnitt und/oder der zweite Kolbenabschnitt einen konusartigen Abschnitt aufweisen, dessen Querschnitt senkrecht zur Achse A sich zumindest abschnittsweise entlang der Achse A kontinuierlich verändert.

9. Pipettiervorrichtung gemäß mindestens einem der vorherigen Ansprüche, die eine erste Ventileinrichtung mit einer ersten Ventilkammer und eine zweite Ventileinrichtung mit einer zweiten Ventilkammer aufweist, wobei die Pumpeneinrichtung zur Erzeugung eines ersten Kammerdrucks in der ersten Ventilkammer mit dieser verbunden ist und zur Erzeugung eines zweiten Kammerdrucks in der zweiten Ventilkammer mit dieser verbunden ist, wobei die erste Ventilkammer und die zweite Ventilkammer jeweils mit dem Pipettierkanal und dem Bypasskanal verbunden sind,
wobei die erste Ventileinrichtung so ausgebildet ist, dass in dem Pipettierkanal ein Druck eingestellt wird, der zum Ansaugen einer fluiden Probe in einen mit dem Pipettierkanal luftdicht verbundenen Pipettierbehälter geeignet ist, und
wobei die zweite Ventileinrichtung so ausgebildet ist, dass in dem Pipettierkanal ein Druck eingestellt wird, der zum Abgeben einer fluiden Probe aus einem mit dem Pipettierkanal luftdicht verbundenen Pipettierbehälter geeignet ist.

10. Pipettiervorrichtung gemäß Anspruch 9, die manuell bedienbar ist und so ausgebildet ist, dass
zum Ansaugen der fluiden Probe der Verbindungskanal zwischen der ersten Ventilkammer und dem Pipettierkanal zumindest teilweise geöffnet ist und der Verbindungskanal zwischen der zweiten Ventilkammer und dem Pipettierkanal geschlossen ist, und dass
zum Abgeben der fluiden Probe der Verbindungskanal zwischen der ersten Ventilkammer und dem Pipettierkanal geschlossen ist und der Verbindungskanal zwischen der zweiten Ventilkammer und dem Pipettierkanal zumindest teilweise geöffnet ist.

11. Pipettiervorrichtung gemäß Anspruch 9 oder 10, die manuell bedienbar ist und so ausgebildet ist, dass
zum Ansaugen der fluiden Probe der Verbindungskanal zwischen der ersten Ventilkammer und dem Bypasskanal zumindest teilweise geöffnet ist oder verschlossen ist, und der Verbindungskanal zwischen der zweiten Ventilkammer und dem Bypasskanal offen ist, und dass
zum Abgeben der fluiden Probe der Verbindungskanal zwischen der ersten Ventilkammer und dem Bypasskanal offen ist und der Verbindungskanal zwischen der zweiten Ventilkammer und dem Bypasskanal zumindest teilweise oder vollständig geöffnet ist.

12. Pipettiervorrichtung gemäß mindestens einem der Ansprüche 9 bis 11, die so ausgebildet ist, dass durch den Bypasskanal im Wesentlichen nur das Luftvolumen mit der Umgebung ausgetauscht wird, das dem Luftvolumen entspricht, dass zum Einstellen des gewünschten Pipettierdrucks in dem Pipettierkanal benötigt wird, wobei ein Luftaustausch im Wesentlichen nur beim Einstellen des Pipettierdrucks erfolgt und im Wesentlichen nicht erfolgt, wenn der gewünschte Pipettierdruck erreicht ist.

13. Pipettiervorrichtung gemäß mindestens einem der Ansprüche 9 bis 12, die genau eine Pumpeneinrichtung und mindestens einen ersten Pumpkanal für die angesaugte Luft aufweist, der saugseitig mit der Pumpeneinrichtung verbunden ist und einen zweiten Pumpkanal für die ausgegebene Luft aufweist, der druckseitig mit der Pumpeneinrichtung verbunden ist, wobei der erste Pumpkanal mit der ersten Ventilkammer verbunden ist und der zweite Pumpkanal mit der zweiten Ventilkammer verbunden ist, so dass mittels der einen Pumpeneinrichtung sowohl der Ansaugdruck in der ersten Ventilkammer als auch der Abgabedruck in der zweiten Ventilkammer herstellbar ist.

14. Pipettiervorrichtung gemäß mindestens einem der vorherigen Ansprüche, die als handbedienbare elektrische Pipettiervorrichtung ausgebildet ist, die einen pistolenartigen Griff aufweist, der mindestens ein durch den Benutzer einstellbares Betätigungselement aufweist, durch dessen Betätigung, zur Erzeugung des gewünschten Pipettierdrucks in dem Pipettierkanal, der Kammerdruck vom Benutzer gesteuert und durch die mindestens eine Ventileinrichtung dosiert auf den Pipettierkanal und den Bypasskanal verteilt wird.

15. Pipettiervorrichtung gemäß Anspruch 2, die eine Einrichtung zur automatischen Einstellung der Pumpleistung der mindestens einen Pumpeneinrichtung in Abhängigkeit von der Position des Verschlusselementes gegenüber dem Basiskörper der Ventileinrichtung aufweist.

16. Verfahren zur Herstellung der Pipettiervorrichtung (1) gemäß mindestens einem der Ansprüche 1 bis 15, zumindest aufweisend die Schritte:
- Fertigen der mindestens einen Ventileinrichtung zumindest teilweise aus einem ersten Material;
- Fertigen des mindestens einen Pipettierkanals und des mindestens einen Bypasskanals, zumindest teilweise aus einem zweiten Material.

## Claims

1. Pipetting apparatus (1) for pipetting a fluid sample (9a) by aspiration into a pipetting container (9) by means of air (9b) under a pipetting pressure, comprising
- a valve arrangement (10; 100; 200) having at least one valve device (101; 102; 101") for setting a pipetting pressure, wherein the valve device comprises a valve chamber (106; 106'; 106");
- at least one pump device (7), which is connected to the valve chamber to generate a chamber pressure in the valve chamber;
- a pipetting channel (103; 103"), to which the pipetting container can be connected,
**characterized in that**
- the pipetting apparatus (1) has a bypass channel (104; 104"), which is open to the surrounding environment,
- wherein the pipetting channel and the bypass channel are each connected to the valve chamber;
- and wherein the at least one valve device is designed such that, to generate the desired pipetting pressure in the pipetting channel, the chamber pressure is distributed by the valve device between the pipetting channel and the bypass channel, and
wherein the pipetting channel (103; 103") is connected to the valve chamber (106; 106'; 106") via a first connecting channel (163c; 163c'; 163c") having variable flow resistance, and the bypass channel (104; 104") is connected to the valve chamber (106; 106'; 106") via a second connecting channel (163d; 163d'; 163d") having variable flow resistance, wherein, to generate the desired pipetting pressure in the pipetting channel, the first flow resistance and the second flow resistance are adapted by the valve device.

2. Pipetting apparatus according to Claim 1, wherein the valve device comprises a closure support element (161; 161'; 161") and at least one closure element (110; 110'; 110"), which is arranged so as to be movable in translation relative to the closure support element at least between a first position and a second position, wherein the closure element closes the first connecting channel in the first position and does not close the first connecting channel in the second position, and wherein the closure element does not close the second connecting channel in the first position and closes the second connecting channel in the second position.

3. Pipetting apparatus according to Claim 2, wherein the closure element is formed such that it partially opens the first connecting channel and the second connecting channel when it is arranged in a third position between the first and second position.

4. Pipetting apparatus according to Claim 2 or 3, wherein the closure element is formed such that it closes the first connecting channel further in a third position than in a fourth position, and closes the second connecting channel further in the fourth position than in the third position when the closure element is arranged in a third position or fourth position, which is located between the first position and second position.

5. Pipetting apparatus according to at least one of Claims 2 to 4, which is manually operable, wherein the valve device is designed for the position of the closure element to be determined by the user in order to set the desired pipetting pressure in the pipetting line.

6. Pipetting apparatus according to at least one of the preceding Claims 2 to 5, wherein the at least one valve device comprises a valve chamber, and wherein the closure element is a valve piston (110; 110'; 110"), which extends along an axis A through the valve device and is movable in translation along the axis A relative to the closure support element, at least between a first position and a second position.

7. Pipetting apparatus according to Claim 6, wherein the first connecting channel has a first opening cross section, and the valve piston has a first piston portion, which is arranged movably in the first opening cross section so as to close said first opening cross section, at least in part or completely, between the first and second position, and
wherein the second connecting channel has a second opening cross section, and the valve piston has a second piston portion, which is arranged movably in the second opening cross section so as to close said second opening cross section, at least in part or completely, between the second and first position.

8. Pipetting apparatus according to Claim 7, wherein the first piston portion and/or the second piston portion has a conical portion, of which the cross section perpendicular to the axis A changes, at least over portions, continuously along the axis A.

9. Pipetting apparatus according to at least one of the preceding claims, which comprises a first valve device having a first valve chamber and a second valve device having a second valve chamber, wherein the pump device is connected to the first valve chamber to generate a first chamber pressure therein and is connected to the second valve chamber to generate a second chamber pressure therein, wherein the first valve chamber and the second valve chamber are each connected to the pipetting channel and to the bypass channel,
wherein the first valve device is designed such that a pressure is set in the pipetting channel and is suitable for aspirating a fluid sample into a pipetting container connected in an airtight manner to the pipetting channel, and
wherein the second valve device is designed such that a pressure is set in the pipetting channel and is suitable for dispensing a fluid sample from a pipetting container connected in an airtight manner to the pipetting channel.

10. Pipetting apparatus according to Claim 9, which is manually operable and is designed such that,
to aspirate the fluid sample, the connecting channel between the first valve chamber and the pipetting channel is at least partially opened and the connecting channel between the second valve chamber and the pipetting channel is closed, and such that,
to dispense the fluid sample, the connecting channel between the first valve chamber and the pipetting channel is closed and the connecting channel between the second valve chamber and the pipetting channel is at least partially opened.

11. Pipetting apparatus according Claim 9 or 10, which is manually operable and is designed such that,
to aspirate the fluid sample, the connecting channel between the first valve chamber and the bypass channel is at least partially opened or is closed, and the connecting channel between the second valve chamber and the bypass channel is open, and such that,
to dispense the fluid sample, the connecting channel between the first valve chamber and the bypass channel is open and the connecting channel between the second valve chamber and the bypass channel is at least partially or completely opened.

12. Pipetting apparatus according to at least one of Claims 9 to 11, which is designed such that only the air volume corresponding to the air volume that is required to set the desired pipetting pressure in the pipetting channel is exchanged with the surrounding environment through the bypass channel, wherein air is exchanged substantially only when setting the pipetting pressure and substantially no air is exchanged when the desired pipetting pressure has been reached.

13. Pipetting apparatus according to at least one of Claims 9 to 12, which has exactly one pump device and at least one first pump channel for the aspirated air, which is connected on the intake side to the pump device, and a second pump channel for the dispensed air, which is connected on the delivery side to the pump device, wherein the first pump channel is connected to the first valve chamber and the second pump channel is connected to the second valve chamber, such that both the suction pressure in the first valve chamber and the delivery pressure in the second valve chamber can be produced by means of the one pump device.

14. Pipetting apparatus according to at least one of the preceding claims, which is designed as a manually operable electric pipetting apparatus, which comprises a pistol-like grip, which comprises at least one actuation element, which can be engaged by the user, the chamber pressure being controlled by the user and distributed, metered by the at least one valve device, between the pipetting channel and the bypass channel upon actuation of said actuation element to generate the desired pipetting pressure in the pipetting channel.

15. Pipetting apparatus according to Claim 2, which comprises a device for automatically setting the pump output of the at least one pump device according to the position of the closure element relative to the main body of the valve device.

16. Method for producing the pipetting apparatus (1) according to at least one of Claims 1 to 15, said method at least comprising the following steps:
- manufacturing the at least one valve device at least partially from a first material;
- manufacturing the at least one pipetting channel and the at least one bypass channel at least partially from a second material.

## Revendications

1. Dispositif de pipetage (1) pour pipeter un échantillon fluide (9a) par aspiration dans un récipient de pipetage (9) au moyen d'un air (9b) situé sous une pression de pipetage, comportant
- un agencement de soupape (10 ; 100 ; 200) avec au moins un mécanisme de soupape (101 ; 102 ; 101") pour établir une pression de pipetage, où le mécanisme de soupape comporte une chambre de soupape (106 ; 106' ; 106") ;
- au moins un dispositif de pompe (7), qui, pour la production d'une pression de chambre dans la chambre de soupape, est relié avec la chambre de soupape ;
- un canal de pipetage (103 ; 103"), avec lequel le récipient de pipetage peut être relié et **caractérisé en ce que** le dispositif de pipetage (1) comporte
- un canal de bypass (104 ; 104"), qui est ouvert à l'environnement ;
- où le canal de pipetage et le canal de bypass sont reliés chacun avec la chambre de soupape ;
- et où le au moins un mécanisme de soupape est agencé de telle manière que, pour produire la pression de pipetage souhaitée dans le canal de pipetage, la pression de chambre est répartie par le mécanisme de soupape sur le canal de pipetage et le canal de bypass ; et où le canal de pipetage (103 ; 103") est relié par le biais d'un premier canal de liaison (163c ; 163c' ; 163c") avec une résistance à l'écoulement variable avec la chambre de soupape (106 ; 106' ; 106") et le canal de bypass (104 ; 104") est relié par le biais d'un deuxième canal de liaison (163d ; 163d' ; 163d") avec une résistance à l'écoulement variable avec la chambre de soupape (106 ; 106' ; 106"), où, pour produire la pression de pipetage souhaitée dans le canal de pipetage, la première résistance à l'écoulement et la deuxième résistance à l'écoulement sont adaptées par le mécanisme de soupape.

2. Dispositif de pipetage selon la revendication 1, où le mécanisme de soupape comporte un élément de support de fermeture (161 ; 161' ; 161") et comporte au moins un élément de fermeture (110 ; 110' ; 110"), qui est agencé de manière mobile en translation par rapport à l'élément de support de fermeture au moins entre une première position et une deuxième position, où l'élément de fermeture ferme dans la première position le premier canal de liaison et ne le ferme pas dans la deuxième position et où l'élément de fermeture ne ferme pas le deuxième canal de liaison dans la première position et le ferme dans la deuxième position.

3. Dispositif de pipetage selon la revendication 2, où l'élément de fermeture est agencé de telle manière qu'il ouvre partiellement le premier canal de liaison et le deuxième canal de liaison quand il est agencé dans une troisième position entre la première et la deuxième position.

4. Dispositif de pipetage selon la revendication 2 ou 3, où l'élément de fermeture est agencé de telle manière qu'il ferme le premier canal de liaison dans une troisième position davantage que dans une quatrième position, et qu'il ferme le deuxième canal de liaison dans la quatrième position davantage que dans la troisième position, quand l'élément de fermeture est agencé dans une troisième position ou une quatrième position qui est située entre la première position et la deuxième position.

5. Dispositif de pipetage selon au moins l'une des revendications 2 à 4, qui peut être utilisé manuellement, où le mécanisme de soupape est agencé pour que la position de l'élément de fermeture soit déterminée par l'utilisateur pour établir la pression de pipetage souhaitée dans la conduite de pipetage.

6. Dispositif de pipetage selon au moins l'une des revendications précédentes 2 à 5, où le au moins un mécanisme de soupape comporte une chambre de soupape et où l'élément de fermeture est un piston de soupape (110 ; 110' ; 110") qui s'étend le long d'un axe A dans le mécanisme de soupape et qui est mobile par rapport à l'élément de support de fermeture le long de l'axe A en translation au moins entre une première position et une deuxième position.

7. Dispositif de pipetage selon la revendication 6, où le premier canal de liaison comporte une première section d'ouverture et le piston de soupape comporte un premier segment de piston, qui est agencé de manière mobile dans la première section d'ouverture, pour fermer celle-ci au moins partiellement ou totalement entre la première et la deuxième position et
où le deuxième canal de liaison comporte une deuxième section d'ouverture et le piston de soupape comporte un deuxième segment de piston, qui est agencé de manière mobile dans la deuxième section d'ouverture, pour fermer celle-ci au moins partiellement ou totalement entre la deuxième et la première position.

8. Dispositif de pipetage selon la revendication 7, où le premier segment de piston et/ou le deuxième segment de piston comportent un segment en forme de cône dont la section varie en continu perpendiculairement à l'axe A au moins par segments le long de l'axe A.

9. Dispositif de pipetage selon au moins l'une des revendications précédentes qui comporte un premier mécanisme de soupape avec une première chambre de soupape et un deuxième mécanisme de soupape avec une deuxième chambre de soupape, où le mécanisme de pompe pour produire une première pression de chambre dans la première chambre de soupape est relié avec celle-ci et pour produire une deuxième pression de chambre dans la deuxième chambre de soupape est relié avec celle-ci, où la première chambre de soupape et la deuxième chambre de soupape sont reliées respectivement avec le canal de pipetage et le canal de bypass,
où le premier mécanisme de soupape est agencé de telle manière que, il est établi dans le canal de pipetage une pression qui est appropriée pour l'aspiration d'un échantillon fluide dans un récipient de pipetage relié de manière étanche à l'air avec le canal de pipetage, et
où le deuxième mécanisme de soupape est agencé de telle manière que, dans le canal de pipetage, il est établi une pression qui est appropriée pour la délivrance d'un échantillon fluide depuis un récipient de pipetage relié de manière étanche à l'air avec le canal de pipetage.

10. Dispositif de pipetage selon la revendication 9, qui peut être utilisé manuellement et qui est agencé de telle manière que pour l'aspiration de l'échantillon fluide, le canal de liaison entre la première chambre de soupape et le canal de pipetage est ouvert au moins partiellement et le canal de liaison entre la deuxième chambre de soupape et le canal de pipetage est fermé, et en ce que
pour la délivrance de l'échantillon fluide, le canal de liaison entre la première chambre de soupape et le canal de pipetage est fermé et le canal de liaison entre la deuxième chambre de soupape et le canal de pipetage est ouvert au moins partiellement.

11. Dispositif de pipetage selon la revendication 9 ou 10, qui peut être utilisé manuellement et qui est agencé de telle manière que pour l'aspiration de l'échantillon fluide, le canal de liaison entre la première chambre de soupape et le canal de bypass est ouvert au moins partiellement ou est fermé et le canal de liaison entre la deuxième chambre de soupape et le canal de bypass est ouvert, et en ce que
pour la délivrance de l'échantillon fluide, le canal de liaison entre la première chambre de soupape et le canal de bypass est ouvert et le canal de liaison entre la deuxième chambre de soupape et le canal de bypass est ouvert au moins partiellement ou totalement.

12. Dispositif de pipetage selon au moins l'une des revendications 9 à 11, qui est agencé de telle manière que, par le canal de bypass sensiblement seul le volume d'air qui correspond au volume d'air qui est nécessaire pour établir la pression de pipetage souhaitée dans le canal de pipetage est échangé avec l'environnement, où un échange d'air n'a lieu sensiblement que lors de l'établissement de la pression de pipetage et n'a sensiblement pas lieu quand la pression de pipetage souhaitée est atteinte.

13. Dispositif de pipetage selon au moins l'une des revendications 9 à 12, qui comporte exactement un mécanisme de pompe et au moins un premier canal de pompage pour l'air aspiré, qui est relié côté aspiration avec le mécanisme de pompe et comporte un deuxième canal de pompage pour l'air délivré, qui est relié côté pression avec le mécanisme de pompe, où le premier canal de pompage est relié avec la première chambre de soupape et le deuxième canal de pompage est relié avec la deuxième chambre de soupape de sorte qu'au moyen du premier mécanisme de pompe la pression d'aspiration dans la première chambre de soupape de même que la pression de délivrance dans la deuxième chambre de soupape peuvent être établies.

14. Dispositif de pipetage selon au moins l'une des revendications précédentes, qui est agencé sous forme d'un dispositif de pipetage électrique utilisable manuellement, qui comporte une poignée analogue à un pistolet, qui comporte au moins un élément d'actionnement réglable par l'utilisateur, par l'actionnement duquel, pour produire la pression de pipetage souhaitée dans le canal de pipetage, la pression de chambre est commandée par l'utilisateur et est répartie de manière dosée par le au moins un mécanisme de soupape sur le canal de pipetage et le canal de bypass.

15. Dispositif de pipetage selon la revendication 2, qui comporte un mécanisme pour l'établissement automatique des performances de pompage du au moins un mécanisme de pompe en fonction de la position de l'élément de fermeture par rapport au corps de base du mécanisme de soupape.

16. Procédé pour produire le dispositif de pipetage (1) selon au moins l'une des revendications 1 à 15, comportant au moins les étapes :
- production du au moins un mécanisme de soupape au moins partiellement en un premier matériau ;
- production du au moins un canal de pipetage et du au moins un canal de bypass, au moins en partie en un second matériau.
